# EUROPEAN PATENT APPLICATION

(11) **EP 4 109 821 A1**
(43) Date of publication of application: **28.12.2022**
(21) Application number: 21774761.7
(22) Date of filing: 02.03.2021
(51) Int. Cl.: H04L 12/24, H04L 12/703

(54) **RESTORATION PATH CONFIGURATION METHOD AND APPARATUS**

(30) Priority: 26.03.2020 CN 202010224986
(71) Applicant: HUAWEI TECHNOLOGIES CO., LTD., Shenzhen, Guangdong 518129 (CN)
(72) Inventor: LI, Hao, Shenzhen, Guangdong 518129 (CN); XIE, Gang, Shenzhen, Guangdong 518129 (CN); LUO, Xiaolin, Shenzhen, Guangdong 518129 (CN)
(74) Representative: Pfenning, Meinig & Partner mbB
(86) International application number: PCT/CN2021/078633
(87) International publication number: WO 2021/190256

(57) **Abstract**

This application provides a restoration path configuration method and an apparatus. The method includes: determining a restoration path corresponding to a working path carrying a plurality of services in an optical transmission network, and binding a plurality of restoration paths having a same restoration path segment into a group of restoration paths by using a first identifier ID. The first ID indicates to use the restoration path segment to perform service restoration for services carried on working paths respectively corresponding to the group of restoration paths. The restoration path configuration method provided in this application can improve service restoration performance.

## Description

This application claims priority to Chinese Patent Application No. 202010224986.6, filed with the China National Intellectual Property Administration on March 26, 2020 and entitled "RESTORATION PATH CONFIGURATION METHOD AND APPARATUS", which is incorporated herein by reference in its entirety.

### TECHNICAL FIELD

This application relates to the optical transmission field, and more specifically, to a restoration path configuration method and an apparatus.

### BACKGROUND

With development of optical transmission networks, protection and restoration of an optical transmission network become key concerns in current operations such as design, operation, and maintenance of the optical transmission network. Efficient and flexible protection and restoration manners become important features of an optical transmission network (for example, an automatically switched optical network (automatically switched optical network, ASON)).

The ASON is a next-generation standardized intelligent optical transmission network that implements an automatic switching function under control of signaling. In the ASON, after a fiber cut occurs in the network, an end-to-end restoration path may be automatically established using resource reservation protocol traffic engineering (resource reservation protocol traffic engineering, RSVP-TE) of the generalized multi-protocol label switching (generalized multi-protocol label switching, GMPLS) protocol, to provide a real-time rerouting restoration capability for a service. However, as a quantity of services gradually increases, a size of a packet used for service rerouting increases, transmission duration is prolonged, and service restoration performance deteriorates. Therefore, how to improve batch service restoration performance becomes an urgent problem to be resolved.

### SUMMARY

This application provides a restoration path configuration method and an apparatus, to improve batch service restoration performance during service restoration.

According to a first aspect, a restoration path configuration method is provided. The restoration path configuration method may be performed by a network device, or may be performed by a chip or a circuit disposed in a network device. This is not limited in this application.

For example, a network device in this application includes a path computation element (path computation element, PCE) (which may also be referred to as a controller) or a node with a path computation capability. The node with a path computation capability may be understood that a PCE controller is configured on the node, or a unit with a path computation function is configured on the node. How the node has the path computation capability is not limited in this application.

The restoration path configuration method includes: A network device determines a first restoration path of a first working path and a second restoration path of a second working path, where the first restoration path is used to perform service restoration for the first working path when the first working path is faulty, the second restoration path is used to perform service restoration for the second working path when the second working path is faulty, and the first restoration path and the second restoration path have a same restoration path segment. The network device generates a first identifier (identifier, ID), where the first ID indicates to use the restoration path segment to perform service restoration for the first working path and the second working path.

According to the restoration path configuration method provided in this application, the network device generates the first ID, where the first ID identifies at least two restoration paths having a same restoration path segment. When at least two working paths respectively corresponding to the at least two restoration paths are faulty, service restoration is performed on the at least two working paths based on the first ID by using the same restoration path segment. This can improve batch service restoration performance.

With reference to the first aspect, in some implementations of the first aspect, the method further includes: The network device sends a first configuration message to a head node of the restoration path segment, where the first configuration message carries the first ID.

According to the restoration path configuration method provided in this application, after generating the first ID, the network device may send the first ID to the head node of the restoration path segment by using the first configuration message. Therefore, in a subsequent service restoration process, the head node of the restoration path segment can activate the restoration path segment based on the first ID, and restore the first restoration path and the second restoration path at the same time, thereby implementing batch restoration performance.

With reference to the first aspect, in some implementations of the first aspect, the method further includes: The network device sends a second configuration message to the head node of the restoration path segment, where the second configuration message carries routing information of the restoration path segment.

According to the restoration path configuration method provided in this application, after learning that the first restoration path and the second restoration path have a same restoration path segment, the network device may send the routing information of the restoration path segment to the head node of the restoration path segment by using the second configuration message. Therefore, the head node of the restoration path segment can determine nodes that form the restoration path segment together with the head node of the restoration path segment, so that the head node of the restoration path segment can quickly initiate rerouting based on the routing information of the restoration path segment in a subsequent service restoration process, to improve a service restoration speed.

With reference to the first aspect, in some implementations of the first aspect, the method further includes: The network device sends a third configuration message to a node of the restoration path segment, where the third configuration message carries a channel resource of the restoration path segment in the first restoration path and a channel resource of the restoration path segment in the second restoration path. That the first ID indicates to use the restoration path segment to perform service restoration for the first working path and the second working path includes: The first ID indicates to use the channel resource of the restoration path segment in the first restoration path to perform service restoration for the first working path, and use the channel resource of the restoration path segment in the second restoration path to perform service restoration for the second working path.

According to the restoration path configuration method provided in this application, the network device pre-configures, by using the third configuration message, a channel resource required by a node of the restoration path segment in the service restoration process. In this way, when the first working path and the second working path are faulty, service restoration can be quickly implemented based on the pre-configured resource.

With reference to the first aspect, in some implementations of the first aspect, the method further includes: The network device sends a fourth configuration message to an end node of the restoration path segment. The fourth configuration message carries a type of the end node, the type of the end node includes the head node of the restoration path segment or a last node of the restoration path segment, and the head node of the restoration path segment or the last node of the restoration path segment has a path restoration capability.

According to the restoration path configuration method provided in this application, the network device notifies, by using the fourth configuration message, whether an end node of the restoration path segment is specifically the head node or the last node. Therefore, the end node of the restoration path segment can clearly learn of an identity of the end node of the restoration path segment, and the end node of the restoration path segment can initiate rerouting based on the identity of the end node and the first ID to implement service restoration.

With reference to the first aspect, in some implementations of the first aspect, when the network device is the head node of the restoration path segment, and the network device determines that the first working path and the second working path are faulty, the method further includes: The network device sends a path establishment request message to an adjacent downstream node of the restoration path segment, where the path establishment request message carries the first ID.

According to the restoration path configuration method provided in this application, in a scenario in which the network device is the head node of the restoration path segment, the network device may skip the foregoing procedure of configuring related information for the head node of the restoration path segment, and initiate path establishment when a fault occurs, thereby reducing signaling overheads.

With reference to the first aspect, in some implementations of the first aspect, when the restoration path segment is used to perform service restoration for the first working path and the second working path, the method further includes: The network device receives a path establishment response message, where the path establishment response message indicates a service restoration result of the first working path and a service restoration result of the second working path.

According to the restoration path configuration method provided in this application, the network device may learn, by using the path establishment response message, whether the service restoration succeeds, and complete the service restoration procedure.

According to a second aspect, a restoration path configuration method is provided. The restoration path configuration method may be performed by a first node, or may be performed by a chip or a circuit disposed in a first node. This is not limited in this application.

For example, the first node in this application includes a head node of the restoration path segment, an intermediate node of the restoration path segment, or a last node of the restoration path segment. For differentiation, in this embodiment, the head node of the restoration path segment is referred to as a third node, the last node of the restoration path segment is referred to as a fourth node, and the intermediate node of the restoration path segment is referred to as a fifth node.

The restoration path configuration method includes: The first node receives a first configuration message. The first configuration message carries a first identifier ID, and the first ID indicates to use a restoration path segment to perform service restoration for a first working path and a second working path.

The restoration path segment is a same restoration path segment in a first restoration path and a second restoration path. The first restoration path is used to perform service restoration for the first working path when the first working path is faulty. The second restoration path is used to perform service restoration for the second working path when the second working path is faulty. The first node stores the first ID.

According to the restoration path configuration method provided in this application, the first node receives and stores the first ID, so that in a subsequent process of performing service restoration, the first node can activate the restoration path segment based on the first ID, and restore the first restoration path and the second restoration path at the same time, thereby implementing batch restoration performance.

With reference to the second aspect, in some implementations of the second aspect, the method further includes: The first node receives a second configuration message from a network device, where the second configuration message carries routing information of the restoration path segment.

According to the restoration path configuration method provided in this application, after learning that the first restoration path and the second restoration path have a same restoration path segment, the network device may send the routing information of the restoration path segment to the first node by using the second configuration message. Therefore, the first node can determine nodes that form the restoration path segment together with the first node, so that the first node can quickly initiate rerouting based on the routing information of the restoration path segment in the subsequent service restoration process, to improve a service restoration speed.

With reference to the second aspect, in some implementations of the second aspect, the method further includes: The first node receives a third configuration message from the network device, where the third configuration message carries a channel resource of the restoration path segment in the first restoration path and a channel resource of the restoration path segment in the second restoration path. That the first ID indicates to use the restoration path segment to perform service restoration for the first working path and the second working path includes: The first ID indicates to use the channel resource of the restoration path segment in the first restoration path to perform service restoration for the first working path, and use the channel resource of the restoration path segment in the second restoration path to perform service restoration for the second working path.

According to the restoration path configuration method provided in this application, the network device pre-configures, by using the third configuration message, a channel resource required by a node of the restoration path segment in the service restoration process. In this way, when the first working path and the second working path are faulty, service restoration can be quickly implemented based on the pre-configured resource.

With reference to the second aspect, in some implementations of the second aspect, the method further includes: The first node receives a fourth configuration message from the network device. The fourth configuration message carries a type of the end node, the type of the end node includes a head node of the restoration path segment or a last node of the restoration path segment, and the head node of the restoration path segment or the last node of the restoration path segment has a path restoration capability.

According to the restoration path configuration method provided in this application, the network device notifies, by using the fourth configuration message, whether an end node of the restoration path segment is specifically the head node or the last node. Therefore, the end node of the restoration path segment can clearly learn of an identity of the end node of the restoration path segment, and the end node of the restoration path segment can initiate rerouting based on the identity of the end node and the first ID to implement service restoration.

With reference to the second aspect, in some implementations of the second aspect, when the first node determines that the first working path and the second working path are faulty, the method further includes: The first node sends a path establishment request message to an adjacent downstream node of the restoration path segment, where the path establishment request message carries the first ID.

According to the restoration path configuration method provided in this application, in a scenario in which the network device is the first node, the network device may skip the foregoing procedure of configuring related information for the first node, and initiate path establishment when a fault occurs, thereby reducing signaling overheads.

With reference to the second aspect, in some implementations of the second aspect, when the restoration path segment is used to perform service restoration for the first working path and the second working path, the method further includes: The first node sends a path establishment response message to the network device, where the path establishment response message indicates a service restoration result of the first working path and a service restoration result of the second working path.

According to the restoration path configuration method provided in this application, the network device may learn, by using the path establishment response message, whether the service restoration succeeds, and complete the service restoration procedure.

According to a third aspect, a restoration path configuration apparatus is provided. The restoration path configuration apparatus includes a processor, configured to implement the function of the network device in the method described in the first aspect.

Optionally, the restoration path configuration apparatus may further include a memory. The memory is coupled to the processor, and the processor is configured to implement the function of the network device in the method described in the first aspect.

In a possible implementation, the memory is configured to store program instructions and data. The memory is coupled to the processor. The processor may invoke and execute the program instructions stored in the memory, to implement the function of the network device in the method described in the first aspect.

Optionally, the restoration path configuration apparatus may further include a communication interface, and the communication interface is used by the restoration path configuration apparatus to communicate with another device. When the restoration path configuration apparatus is the network device, a transceiver may be a communication interface or an input/output interface.

In a possible design, the restoration path configuration apparatus includes a processor and a communication interface, configured to implement the function of the network device in the method described in the first aspect, and specifically includes: The processor communicates with an external device through the communication interface. The processor is configured to run a computer program, so that the apparatus implements any method described in the first aspect.

It may be understood that the external device may be an object other than the processor, or an object other than the apparatus.

In another implementation, when the restoration path configuration apparatus is a chip or a chip system, the communication interface may be an input/output interface, an interface circuit, an output circuit, an input circuit, a pin, a related circuit, or the like in the chip or the chip system. The processor may alternatively be embodied as a processing circuit or a logic circuit.

According to a fourth aspect, a restoration path configuration apparatus is provided. The restoration path configuration apparatus includes a processor, configured to implement the function of the first node in the method described in the second aspect.

Optionally, the restoration path configuration apparatus may further include a memory. The memory is coupled to the processor, and the processor is configured to implement the function of the first node in the method described in the second aspect.

In a possible implementation, the memory is configured to store program instructions and data. The memory is coupled to the processor. The processor may invoke and execute the program instructions stored in the memory, to implement the function of the first node in the method described in the second aspect.

Optionally, the restoration path configuration apparatus may further include a communication interface, and the communication interface is used by the restoration path configuration apparatus to communicate with another device. When the restoration path configuration apparatus is the first node, a transceiver may be a communication interface or an input/output interface.

In a possible design, the restoration path configuration apparatus includes a processor and a communication interface, configured to implement the function of the first node in the method described in the second aspect, and specifically includes: The processor communicates with an external device through the communication interface. The processor is configured to run a computer program, so that the apparatus implements any method described in the second aspect.

It may be understood that the external device may be an object other than the processor, or an object other than the apparatus.

In another implementation, when the restoration path configuration apparatus is a chip or a chip system, the communication interface may be an input/output interface, an interface circuit, an output circuit, an input circuit, a pin, a related circuit, or the like in the chip or the chip system. The processor may alternatively be embodied as a processing circuit or a logic circuit.

According to a fifth aspect, a computer-readable storage medium is provided. The computer-readable storage medium stores a computer program. When the computer program is executed by a communication apparatus, the communication apparatus is enabled to implement the method according to any one of the first aspect and the possible implementations of the first aspect.

According to a sixth aspect, a computer-readable storage medium is provided. The computer-readable storage medium stores a computer program. When the computer program is executed by a communication apparatus, the communication apparatus is enabled to implement the method according to any one of the second aspect and the possible implementations of the second aspect.

According to a seventh aspect, a computer program product including instructions is provided. When the instructions are executed by a computer, a communication apparatus is enabled to implement the method according to any one of the first aspect and the possible implementations of the first aspect.

According to an eighth aspect, a computer program product including instructions is provided. When the instructions are executed by a computer, a communication apparatus is enabled to implement the method according to any one of the second aspect and the possible implementations of the second aspect.

According to a ninth aspect, a communication system is provided, including the restoration path configuration apparatus shown in the third aspect and the restoration path configuration apparatus shown in the fourth aspect.

### BRIEF DESCRIPTION OF DRAWINGS

FIG. 1 is a schematic diagram of an ASON;
FIG. 2 is a schematic diagram of service restoration;
FIG. 3 is another schematic diagram of service restoration;
FIG. 4(a) is a schematic flowchart of a restoration path configuration method according to this application, and FIG. 4(b) is a schematic diagram of a node configuration in an ASON to which a restoration path configuration method can be applied according to this application;
FIG. 5 is a schematic diagram of a format of a first ID message according to an embodiment of this application;
FIG. 6 is a schematic diagram of a format of routing information of a restoration path segment according to an embodiment of this application;
FIG. 7 is a schematic diagram of a message format of a third configuration message according to an embodiment of this application;
FIG. 8 is a schematic diagram of a message format of a fifth configuration message or a sixth configuration message according to an embodiment of this application;
FIG. 9 is a diagram of a scenario to which a restoration path configuration method can be applied according to an embodiment of this application;
FIG. 10 is a diagram of another scenario to which a restoration path configuration method can be applied according to an embodiment of this application;
FIG. 11 is a diagram of still another scenario to which a restoration path configuration method can be applied according to an embodiment of this application;
FIG. 12 is a diagram of yet another scenario to which a restoration path configuration method can be applied according to an embodiment of this application;
FIG. 13 is a diagram of still yet another scenario to which a restoration path configuration method can be applied according to an embodiment of this application;
FIG. 14 is a diagram of a further scenario to which a restoration path configuration method can be applied according to an embodiment of this application;
FIG. 15 is a schematic block diagram of a restoration path configuration apparatus 1500 according to an embodiment of this application;
FIG. 16 is a schematic block diagram of a restoration path configuration apparatus 1600 according to an embodiment of this application; and
FIG. 17 is a schematic block diagram of a restoration path configuration apparatus 1700 according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. As used in the specification and appended claims of this application, singular expressions "one", "a", "the", "the foregoing", "this", and "the one" are also intended to include expressions such as "one or more", unless otherwise specified in the context clearly. It should be further understood that in the following embodiments of this application, "at least one" and "one or more" mean one, two, or more.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

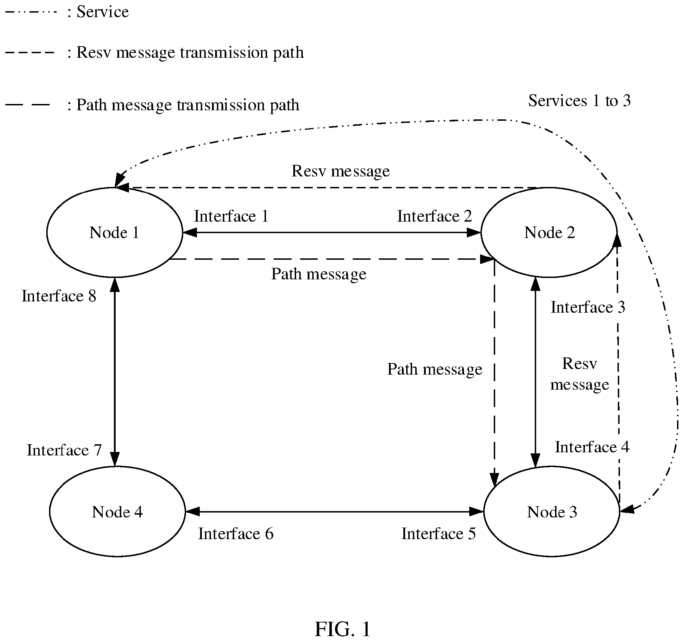

Technical solutions in embodiments of this application may be applied to an ASON. The following first describes an ASON with reference to FIG. 1. FIG. 1 is a schematic diagram of an ASON according to an embodiment of this application.

The ASON may include a plurality of ASON nodes (a node 1, a node 2, a node 3, and a node 4 shown in FIG. 1). Each ASON node obtains information of another node in the ASON by using the open shortest path first (open shortest path first, OSPF) protocol, where the information of the node includes a node identifier and/or a link identifier, and the like.

For example, the node 1 shown in FIG. 1 separately obtains, by using the OSPF protocol, information such as node identifiers and/or link identifiers of the node 2, the node 3, and the node 4 shown in FIG. 1. Similarly, the node 2 shown in FIG. 1 separately obtains, by using the OSPF protocol, information such as node identifiers and/or link identifiers of the node 1, the node 3, and the node 4 shown in FIG. 1. The node 3 shown in FIG. 1 separately obtains, by using the OSPF protocol, information such as node identifiers and/or link identifiers of the node 1, the node 2, and the node 4 shown in FIG. 1. The node 4 shown in FIG. 1 separately obtains, by using the OSPF protocol, information such as node identifiers and/or link identifiers of the node 1, the node 2, and the node 3 shown in FIG. 1.

After obtaining the information of other nodes in the ASON, each ASON node in the ASON may use the constrained shortest path first (constrained shortest path first, CSPF) algorithm to determine an end-to-end service path, and then use the RSVP-TE protocol to establish the end-to-end service path.

For ease of understanding, the following basic concepts related to the ASON are briefly described.

### 1. Node

Node 1 indicates a hardware entity in the ASON. For example, a node may be understood as a transport network device. The ASON shown in FIG. 1 includes four nodes: node 1, node 2, node 3, and node 4.

It should be understood that the ASON shown in FIG. 1 is merely an example, and does not constitute any limitation on the protection scope of this application. A quantity of nodes included in the ASON may be more than four nodes, or a quantity of nodes included in the ASON may be greater than or equal to two.

### 2. Interface

A node has a physical port for sending and/or receiving information. In this application, the physical port on the node is referred to as an interface. Information sent and/or received by the node through the interface may include a network protocol message, traffic data, and the like.

The ASON shown in FIG. 1 has eight interfaces: an interface 1, an interface 2, an interface 3, an interface 4, an interface 5, an interface 6, an interface 7, and an interface 8. The interface 1 and the interface 8 are physical ports of the node 1, the interface 2 and the interface 3 are physical ports of the node 2, the interface 4 and the interface 5 are physical ports of the node 3, and the interface 6 and the interface 7 are physical ports of the node 4.

It should be noted that the physical ports of the nodes shown in FIG. 1 are merely examples, and do not constitute any limitation on the protection scope of this application. For example, the node 1 shown in FIG. 1 may have only one physical port, and complete functions of receiving and/or sending information between the node 2 and the node 4.

### 3. Link

In embodiments of this application, a connection between two adjacent nodes is referred to as a link. A link may be indicated by a link (node-interface, node-interface). Whether a link exists between two adjacent nodes may indicate whether information such as a network protocol message and/or traffic data can be forwarded between the two adjacent nodes. For example, if a link exists between two adjacent nodes, information such as a network protocol message and/or traffic data can be forwarded between the two adjacent nodes. Similarly, if no link exists between two adjacent nodes, information such as a network protocol message and/or traffic data cannot be forwarded between the two adjacent nodes.

For example, a link (node 1-interface 1, node 2-interface 2) indicates that information such as a network protocol message and/or traffic data can be received on the node 2 and the interface 2 after being sent from the interface 1 of the node 1.

The ASON shown in FIG. 1 has eight links: a link 1-2 (node 1-interface 1 -> node 2-interface 1), a link 1-4 (node 1-interface 8 -> node 4-interface 7), a link 2-1 (node 2-interface 2 -> node 1-interface 1), a link 2-3 (node 2-interface 3 -> node 3-interface 4), a link 3-2 (node 3-interface 4 -> node 2-interface 3), a link 3-4 (node 3-interface 5 -> node 4-interface 6), a link 4-3 (node 4-interface 6 -> node 3-interface 5) and a link 4-1 (node 4-interface 7-> node 1-interface 8).

### 4. Service path

A service path may include a working path, a restoration path, a protection path, and the like, and is used to carry data transmission of a service. The service path is a route between a head node and a last node. One or more nodes may exist between the head node and the last node. The head node of the service path indicates a sending node of data in a connection, and the last node of the service path indicates a receiving node of data in the connection. A service path may be indicated by a service (head node-last node). Whether a service path exists between the head node and the last node may indicate whether data can be sent from the head node to the last node. If a service path exists between the head node and the last node, data can be sent from the head node to the last node. Similarly, if no service path exists between the head node and the last node, data cannot be sent from the head node to the last node. A connection between the head node and the last node formed by the service path or transmission data carried on the service path may be referred to as a service.

For example, there are services 1 to 3 in the ASON shown in FIG. 1, indicating that there is a connectable data channel between the node 1 and the node 3, used to transmit data from the node 1 to the node 3. The data channel may be referred to as a path, namely, a data transmission path.

The service path indicates a route from a head node to a last node, and may also be referred to as an end-to-end service path, where "end-to-end" indicates from the head node to the last node.

### 5. RSVP-TE protocol

The ASON may provide functions of end-to-end establishment, query, deletion, attribute modification, and restoration of a service path by using the RSVP-TE protocol. The end-to-end may be considered as from one node to another node.

The end-to-end establishment of a service path includes: The network management system issues a service path creation command to a head node. The head node computes a route and initiates a service path configuration process by using the RSVP-TE signaling protocol. Cross-connections are established node by node from the head node to a downstream node. In this way, the end-to-end establishment of the service path is completed.

The end-to-end establishment of the service path fully uses the routing and signaling functions of each node, and reduces a time period for configuring the service path. As shown in FIG. 1, a process of initiating establishment of services 1 to 3 by using the RSVP-TE signaling protocol includes the following specific steps.

The network management system issues a command to the head node 1 for creating services 1 to 3. The head node 1 determines, by using the CSPF, that a service path of the services 1 to 3 is node 1-node 2-node 3. The head node 1 sends a path (path) message to the adjacent node 2 along a determined service path and through the link 1-2 (node 1-interface 1 -> node 2-interface 2). Specifically, the interface 1 of the node 1 sends the path message (the path message is a type of an RSVP-TE protocol packet) to the interface 2 of the intermediate node 2.

After receiving the path message, the node 2 parses information associated with cross-connection configuration of the node 2 and establishes a reverse cross-connection. Then, the intermediate node 2 sends the path message to the adjacent node 3 through the link 2-3 (node 2-interface 3 -> node 3-interface 4). Specifically, the interface 3 of the node 2 sends the path message to the interface 4 of the last node 3. Similarly, the last node 3 parses a corresponding cross-connection configuration message and establishes a reverse cross-connection of the station.

The last node 3 sends a reservation request (reserved, Resv) message (the Resv message is a type of an RSVP-TE protocol packet) to the head node 1 through the intermediate node 2, and establishes a forward cross-connection on each node along the path. In the same process, the head node 1 sends the path message to the last node 3 through the intermediate node 2, and enables alarm monitoring on the service path along the path. The last node 3 sends the Resv message to the head node 1 through the intermediate node 2 for acknowledgment.

The RSVP-TE signaling automatically completes end-to-end configuration and establishment of services 1 to 3 in the entire process of end-to-end establishment of the service path.

It should be understood that FIG. 1 is merely an example for describing a scenario in which this application can be used, and does not constitute any limitation on the protection scope of this application. The restoration path configuration method provided in this embodiment of this application may alternatively be used in another scenario, for example, another optical transmission network.

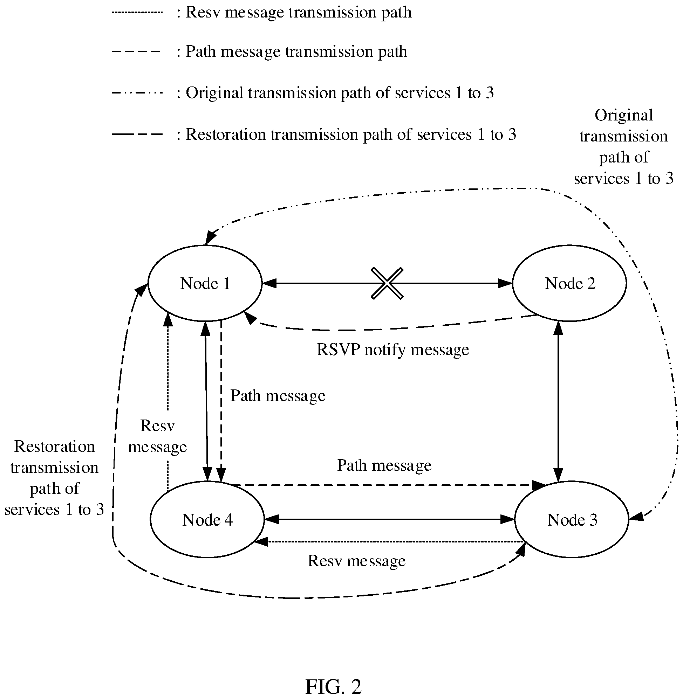

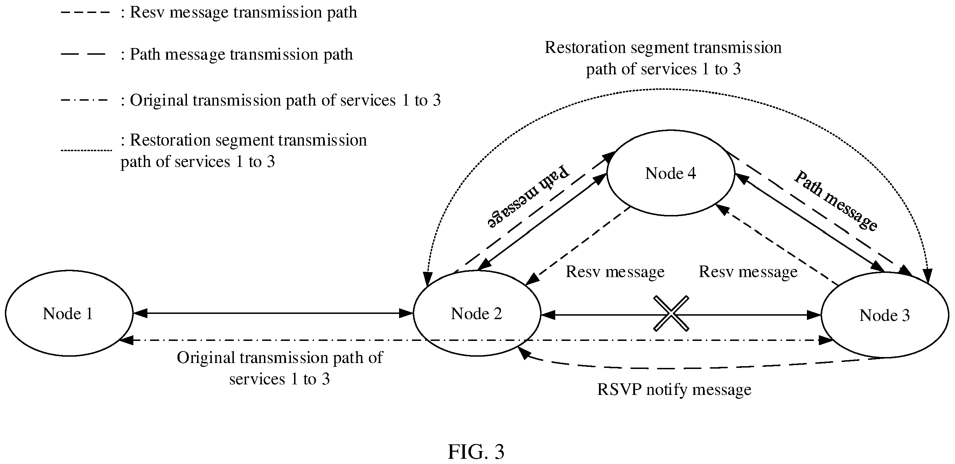

If a fiber cut occurs in the ASON shown in FIG. 1, the node in the ASON may restore the service path by using the RSVP-TE protocol. With reference to FIG. 2 and FIG. 3, the following briefly describes how to implement service path restoration when a fiber cut occurs in the ASON shown in FIG. 1.

FIG. 2 is a schematic diagram of service path restoration. As shown in FIG. 2, a node may implement end-to-end automatic restoration of a service path by using the RSVP-TE protocol.

It can be seen from FIG. 2 that, an original service path of services 1 to 3 automatically established for the services 1 to 3 by using RSVP-TE is node 1-node 2-node 3, where the original service path may also be referred to as a working path. If a fiber cut occurs between the node 1 and the node 2, the end-to-end automatic restoration of a service path by using the RSVP-TE protocol includes:

The node 2 perceives fault alarm information, matches and finds the affected services 1 to 3 based on port alarm information carried in the fault alarm information, and then notifies the head node (node 1) of the affected services 1 to 3 of the fault information by using an RSVP notify (notify) message.

It should be noted that, in this embodiment of this application, how the node 2 perceives the fault alarm information is not limited. After an optical fiber cut occurs between the node 1 and the node 2 (for example, an optical fiber cut occurs in a direction from the node 1 to the node 2, or no optical fiber cut occurs in a direction from the node 2 to the node 1), a bottom layer of the node 2 may perceive the optical fiber cut (for example, the bottom layer of the node 2 perceives an interruption of information transmission). In addition, in this embodiment of this application, how the node 2 transmits the RSVP notify message to the node 1 is not limited. The RSVP notify message may be transmitted to the node 1 by using an optical fiber in the direction from the node 2 to the node 1, or when an optical fiber cut also occurs in the direction from the node 2 to the node 1, the RSVP notify message is transmitted to the node 1 by using another path.

After receiving the RSVP notify message, the node 1 learns of the affected services 1 to 3 by using the fault information, and automatically determines a restoration path (node 1-node 4-node 3 shown in FIG. 2) that can continue to implement the services 1 to 3. Then, the nodes in the ASON use RSVP-TE signaling (path and Resv messages) to create cross-connections hop by hop along the service restoration path (node 1-node 4-node 3) and automatically establish an end-to-end restoration path. After the restoration path is established, services 1 to 3 are automatically restored.

FIG. 3 is another schematic diagram of service path restoration. As shown in FIG. 3, a node in the ASON may implement segment restoration of a service path by using the RSVP-TE protocol.

It can be seen from FIG. 3 that, an original service path (node 1-node 2-node 3 shown in FIG. 3) of services 1 to 3 is automatically established for the services 1 to 3 by using RSVP-TE signaling, where the original service path may also be referred to as a working path. In FIG. 3, the node 2 may be referred to as a fork node, and the node 3 may be referred to as a merge node. If a fiber cut occurs between the node 2 and the node 3, segment restoration of services 1 to 3 by using the RSVP-TE protocol includes:

The node 2 and/or the node 3 perceive fault alarm information (for example, the node 2 perceives the fault alarm information). The node 2 matches and finds the affected services 1 to 3 based on port alarm information in the fault alarm information, and finds that restoration routing information of a corresponding segment is node 2-node 4-node 3 shown in FIG. 3.

Then, restoration cross-connections are established hop by hop along the segment restoration path node 2-node 4-node 3 by initiating RSVP-TE signaling (a path message and a Resv message) with the node 2 as a head node and the node 3 as a last node. The segment restoration path is automatically established. After the segment restoration path is established, services 1 to 3 are automatically restored, and the head node (the node 1) of services 1 to 3 is notified that an end-to-end transmission path of services 1 to 3 is changed (from node 1-node 2-node 3 to node 1-node 2-node 4-node 3).

According to the service restoration methods shown in FIG. 2 and FIG. 3, when a quantity of services in the ASON increases, a size of a rerouting packet increases, transmission is prolonged, and performance of service path restoration gradually deteriorates. For example, in the ASON shown in FIG. 2, if fiber cuts occur on 40 service paths, a rerouting packet of 40 times the rerouting packet shown in FIG. 2 is required.

It should be noted that service path restoration may also be understood as service restoration, because after a service path is restored, transmission of a service carried on the service path can also be correspondingly restored.

With reference to FIG. 1, the foregoing briefly describes a scenario to which the restoration path configuration method provided in embodiments of this application can be applied, and describes basic concepts that may be used in embodiments of this application. With reference to the accompanying drawings, the following describes in detail the restoration path configuration method provided in embodiments of this application.

It should be noted that, that the restoration path configuration method provided in an embodiment of this application can be applied to the ASON shown in FIG. 1 is merely an example, and constitutes no limitation on the protection scope of this application. The restoration path configuration method provided in this application may be further applied to another optical transmission network, for example, GMPLS. When the restoration path configuration method is applied to another optical transmission network other than the ASON, steps performed by a node in the network are similar to steps performed by a node in the ASON when the restoration path configuration method is applied to the ASON. Therefore, for ease of description, an example in which the restoration path configuration method is applied to the ASON is mainly used for description in this embodiment of this application. Details are not described in another scenario.

It should be further understood that a specific structure of an entity for executing the method provided in embodiments of this application is not specially limited in the following embodiments, provided that a program that records code for the method provided in embodiments of this application can be run to perform communication according to the method provided in embodiments of this application. For example, the method provided in embodiments of this application may be performed by a device, or a functional module of a core/metro device that can execute the program.

To improve batch service restoration performance, this application provides a restoration path configuration method and an apparatus. Services with a same restoration path are grouped into a service group. Service restoration is implemented for the service group, thereby improving batch service restoration performance.

For ease of understanding embodiments of this application, the following descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

If information indicated by the indication information is referred to as to-be-indicated information, in a specific implementation process, there are many manners of indicating the to-be-indicated information. For example, but not limited to, the to-be-indicated information may be directly indicated, for example, the to-be-indicated information or an index of the to-be-indicated information. The to-be-indicated information may alternatively be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be further identified and indicated in a unified manner, to reduce indication overheads caused by separately indicating same information.

Second, "first", "second", and various numerical numbers (for example, "1" and "2") in this application are merely used to distinguish between objects for ease of description, but are not intended to limit the scope of embodiments of this application. For example, different nodes, different services, or different service groups are distinguished.

Third, in this application, "preset" may include "indicated by a network device by using signaling" or "predefined", for example, "defined in a protocol". "Predefined" may be implemented by storing corresponding code or a table in a device (for example, the device includes a node and a network device) in advance, or may be implemented in another manner that may indicate related information. A specific implementation of "predefined" is not limited in this application.

Fourth, "storage" in embodiments of this application may be stored in one or more memories. The one or more memories may be separately disposed, or may be integrated into an encoder, a translator, a processor, or a communication apparatus. Alternatively, a part of the one or more memories may be separately disposed, and a part of the one or more memories are integrated into the translator, the processor, or the communication apparatus. A type of the memory may be a storage medium in any form, and this is not limited in this application.

Fifth, a "protocol" in embodiments of this application may be a standard protocol in the optical transmission field, for example, may include a protocol related to an ASON, a protocol related to GMPLS, and a related protocol used in the future optical transmission field. This is not limited in this application.

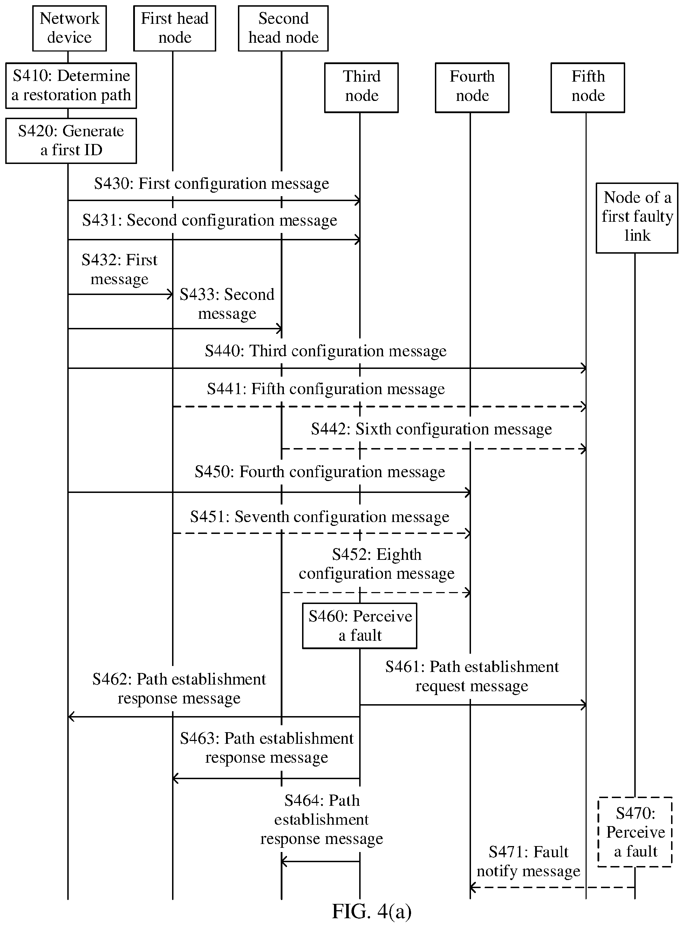

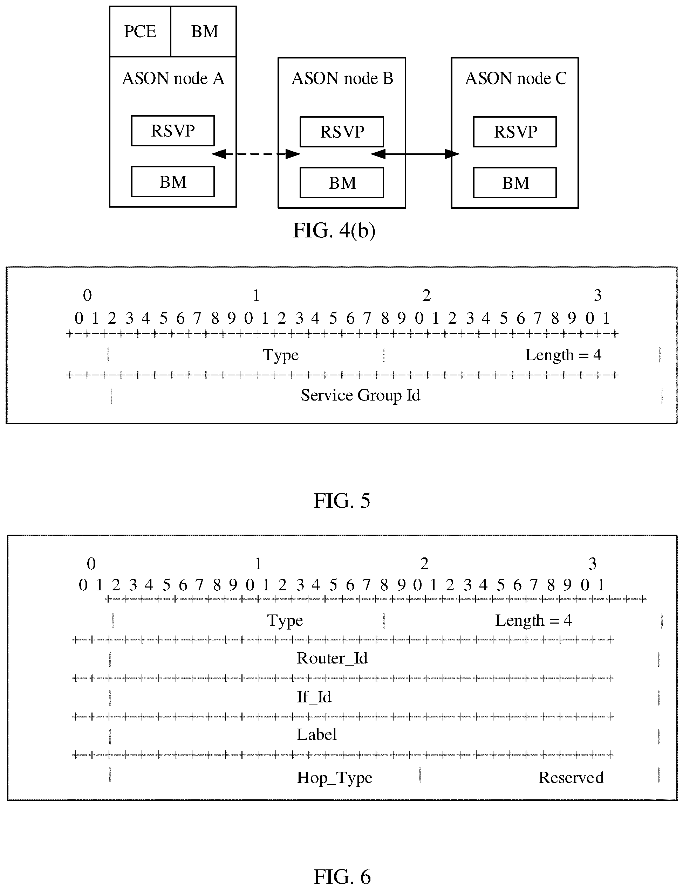

FIG. 4(a) is a schematic flowchart of a restoration path configuration method according to this application. The method may be applied to an ASON, and the ASON includes a plurality of nodes. FIG. 4(b) is a schematic diagram of a node configuration in an ASON to which an embodiment of this application can be applied.

The plurality of nodes included in the ASON all have an ASON function. It can be seen from FIG. 4(b) that each node is deployed with a bundle mapping (bundle mapping, BM) processing unit and a resource reservation protocol (resource reservation protocol, RSVP) control unit.

The ASON includes a network device used for path computation. For example, the network device includes a PCE controller. In other words, at least one PCE controller is disposed in the ASON. Alternatively, for example, the network device includes a node, and the node has a path computation function. For example, at least one node in the ASON is deployed with a PCE controller. For another example, at least one node in the ASON is deployed with a path computation functional module.

In this embodiment of this application, the network device is configured to: when it is assumed that a working path that carries a plurality of services in the ASON is faulty, determine a restoration path corresponding to the working path that carries a plurality of services, denote restoration paths having a same restoration path segment as a group of restoration paths, and generate a first ID for the group of restoration paths. The first ID indicates to use the restoration path segment to perform service restoration for working paths respectively corresponding to the group of restoration paths.

The ID in this embodiment of this application may be understood as identification information, and is used to identify a group of restoration paths. In this embodiment of this application, the ID may also be referred to as an identification information index (index) or indication information, and is referred to as an ID below for ease of description.

In addition, it should be noted that the restoration path corresponding to the working path means that when the working path is faulty, the restoration path is used to perform service restoration for a service carried on the working path. It may also be understood that the restoration path and the working path carry a same service. From this perspective, the foregoing identifier is an ID of a group of restoration paths. Further, it may be understood that the foregoing identifier is an ID of services carried on working paths respectively corresponding to the group of restoration paths. Therefore, in this embodiment of this application, the ID may also be referred to as a service group ID, and is used to identify a group of services.

In the following description, "the restoration path corresponding to the working path" indicates that the restoration path performs service restoration for the service carried on the working path, and "the restoration path corresponding to the service" indicates that the service can be restored on the restoration path.

The BM processing unit manages the ID, for example, adds, deletes, or updates the ID.

The RSVP control unit can manage creation, deletion, or updating of a service group ID to which a single service belongs. After a fault occurs, the RSVP control unit determines an affected service group ID and initiates link creation.

It should be understood that FIG. 4(b) is merely a schematic diagram provided for ease of understanding this application, and does not constitute any limitation on the protection scope of this application. Names of the foregoing units are merely examples. Another unit or module that can implement a same function may be used as a substitute to replace the unit shown in FIG. 4(b).

In this embodiment of this application, an example in which two services (a first service and a second service) form a first service group is used for description. In this embodiment of this application, a node having a path computation function and a PCE controller are collectively referred to as a network device. The first service is carried on the first working path, and a head node of the first working path is referred to as a first head node. The second service is carried on the second working path, and a head node of the second working path is referred to as a second head node.

It should be noted that the first working path and the second working path may be a same working path. In other words, the working path carries a plurality of services. In addition, the first restoration path corresponding to the first working path and the second restoration path corresponding to the second working path may also be a same restoration path. The restoration path may restore a plurality of services carried on either working path.

In FIG. 4(a), the restoration path configuration method includes at least all or some of the following steps.

S410: A network device determines a restoration path.

Specifically, the network device determines a first restoration path of a first working path and a second restoration path of a second working path. The first restoration path is used to perform service restoration for the first working path when the first working path is faulty. The second restoration path is used to perform service restoration for the second working path when the second working path is faulty. The first restoration path and the second restoration path have a same restoration path segment.

In this embodiment of this application, the network device can obtain a service and a topology in the network, determine, based on a faulty link and a restoration path policy, a restoration path corresponding to a working path that carries a service, and bundle and associate, by using a service group ID, a plurality of services having a same restoration path segment. The service group ID identifies that restoration paths corresponding to the plurality of services have a same restoration path segment.

The faulty link and the restoration path policy mean that when the network device determines, on a premise that a link in the network is faulty, restoration paths respectively corresponding to working paths affected by the faulty link, the network device enables a plurality of restoration paths to have a same restoration path segment if possible.

A same restoration path segment in this embodiment of this application is a common path segment or an overlapping path segment of the first restoration path and the second restoration path, or may be understood as an overlapping restoration path segment, a shared restoration path segment, or the like, which is referred to as a restoration path segment for short below. In addition, the first restoration path and the second restoration path have a same restoration path segment. The same restoration path segment may be some path segments of the first restoration path or the second restoration path, or may be all path segments of the first restoration path or the second restoration path.

A specific reason why the working path is faulty is not limited in this embodiment of this application. The fault of the first working path may be that one or more links in the first working path are faulty, a node of the first working path is faulty, or an interface of a node of the first working path is faulty. Similarly, the fault of the second working path includes that one or more links in the second working path are faulty, a node of the second working path is faulty, or an interface of a node of the second working path is faulty.

In a possible implementation, a faulty link in the first working path is the same as a faulty link in the second working path. For example, the first working path and the second working path have a same first link. When the first link is faulty, both the first working path and the second working path are faulty. In this embodiment of this application, the faulty first link is referred to as a first faulty link.

For example, that the first link is faulty may be that at least one of two nodes of the first link is faulty, may be that an interface of at least one of two nodes of the first link is faulty, or may be that an optical fiber between two nodes of the first link is faulty (for example, a fiber cut occurs).

Further, after the network device determines the first restoration path and the second restoration path that have a same restoration path segment, the network device generates a first ID. The first ID indicates to use the restoration path segment to perform service restoration for the first working path and the second working path. The first ID may indicate that service restoration is performed for a plurality of services on the restoration path segment at the same time, or may indicate that service restoration is performed for a plurality of restoration paths having the restoration path segment at the same time. This is equivalent to compressing messages of the plurality of services or the plurality of restoration paths into one message, thereby improving service restoration efficiency.

In other words, the method procedure shown in FIG. 4 further includes S420. S420: Generate the first ID.

The first ID indicates to use the restoration path segment to perform service restoration for the first working path and the second working path.

It should be understood that the first restoration path is used to restore the first service carried on the first working path, and the second restoration path is used to restore the second service carried on the second working path. It may be understood that the first ID is used to identify a service group including the first service and the second service. In this embodiment of this application, the ID may be referred to as a service group ID.

For example, the first working path may be referred to as an original path carrying the first service, and the second working path may be referred to as an original path carrying the second service. The first service may include one or more services, and the second service may also include one or more services.

The network device may determine, based on different faulty links in a working path of each service in the bearer network, at least one restoration path used for service restoration.

In a possible implementation, if a link in the network is faulty, the link affects transmission of a plurality of services, and restoration paths corresponding to working paths that respectively carry the plurality of services have a same restoration path segment, the network device may group the plurality of services into a service group, and generate an ID for the service group.

In another possible implementation, if a plurality of links in the network are faulty, the plurality of links respectively affect transmission of a plurality of services, and restoration paths corresponding to working paths that respectively carry the plurality of services have a same restoration path segment, the network device may group the plurality of services into a service group, and generate an ID for the service group.

It should be noted that a plurality of links in a network are less likely to be faulty at the same time or at a relatively short interval. Generally, when a link is faulty, a plurality of services are affected at the same time. Therefore, this embodiment of this application mainly relates to a scenario in which transmission of a plurality of services is affected when a link in the network is faulty. However, the restoration path configuration method provided in this application is not limited to not being applied to a scenario in which a plurality of links in a network are faulty. Application procedures in different application scenarios are similar. For ease of description, the following mainly uses an example in which a fault of a link (for example, a first faulty link) in a network affects a plurality of services for description.

After generating the first ID, the network device needs to notify a head node (the third node shown in FIG. 4(a)) of the restoration path segment of the first ID. Therefore, the method procedure shown in FIG. 4(a) further includes S430. S430: The network device sends a first configuration message to the third node, where the first configuration message carries the first ID.

For example, the first configuration message may be a path computation element communication protocol (path computation element communication protocol, PCEP) message, the first configuration message may be a protocol message having a same function as that of a PCEP message, or the first configuration message may be implemented by using a new field (for example, an extended PCEP field) in original signaling between the network device and the head node of the restoration path segment.

Further, the network device may further notify the head node (the third node shown in FIG. 4(a)) of the restoration path segment of routing information of the restoration path segment. Therefore, the method procedure shown in FIG. 4(a) further includes S431. S431: The network device sends a second configuration message to the third node, where the second configuration message carries the routing information of the restoration path segment.

The second configuration message may be a PCEP message, the second configuration message may be a protocol message having a same function as that of a PCEP message, or the second configuration message may be implemented by using a new field (for example, an extended PCEP field) in original signaling between the network device and the head node of the restoration path segment.

It should be noted that the first configuration message and the second configuration message may be a same message, or the first configuration message and the second configuration message may be two different messages. This is not limited in this application.

In this embodiment of this application, the first head node of the first working path and the second head node of the second working path may be further notified of the first ID. Specifically, based on an identity of the network device in the network, there are the following manners:

Manner 1: The network device is a PCE

The network device is a PCE controller disposed in the network, and the PCE controller is a device deployed independent of the head nodes of the working paths and the head node and a last node of the restoration path segment.

In Manner 1, after generating the first ID, the network device needs to notify head nodes of the first working path and the second working path of the first ID. Therefore, the method procedure shown in FIG. 4(a) further includes S432 and S433. S432: The network device sends a first message to the first head node. S433: The PCE node sends a second message to the second head node.

The first message and the second message may be understood as PCEP messages, or protocol messages that implement functions similar to those of PCEP messages, or may be existing signaling between the PCE controller and the nodes.

As an example instead of a limitation, the first head node and the second head node may be a same node. In other words, the first working path and the second working path have a same head node. In this case, the first message and the second message may be a same message sent to a same node in the network.

The first message and the second message need to include at least the first ID, so that head nodes of the first working path and the second working path learn of the first ID.

Further, the first message may further include at least one of an identifier of the first service, an identifier of the first faulty link, and routing information of the first restoration path. The second message may further include at least one of an identifier of the second service, the identifier of the first faulty link, and routing information of the second restoration path. The identifier of the first service may be a label switched path (label switched path, LSP) ID of the first service, and the identifier of the second service may be an LSP ID of the second service. In this embodiment of this application, an identifier of a faulty link is not limited. Refer to an identification solution of a faulty link in the existing optical transmission field. For example, if the faulty link is a link between a third node and a fourth node, the identifier of the faulty link may be the faulty link from the third node to the fourth node.

The first message may be one message or a general term of a plurality of messages. To be specific, the first ID, the identifier of the first service, the identifier of the first faulty link, and the routing information of the first restoration path may be sent to the first head node by using one message, or may be sent to the first head node by using a plurality of messages. Similarly, the second message may be one message or a general term of a plurality of messages. To be specific, the first ID, the identifier of the second service, the identifier of the first faulty link, and the routing information of the second restoration path may be sent to the second head node by using one message, or may be sent to the second head node by using a plurality of messages.

It should be noted that, when the first message does not carry the identifier of the first service, it indicates that the first head node can determine that the first head node is the head node of the first working path carrying the first service. For example, if the first head node is used as a head node of a working path, after the first head node receives the first message, even if the first message does not carry the identifier of the first service, the first head node can still learn of the first service carried on the first working path. If the first head node can be used as a head node of a plurality of working paths and the plurality of working paths carry different services, the first message needs to carry the identifier of the first service.

When the first message does not carry the identifier of the first faulty link, it indicates that the first head node can determine that the faulty link is the first link. For example, the first head node learns of the first working path and the first restoration path, and can infer the faulty first link by comparing node changes in the first working path and the first restoration path.

When the first message does not carry the routing information of the first restoration path, it indicates that the first head node can determine the first restoration path. For example, the first head node learns of the first working path and the first faulty link, and locally computes the first restoration path.

That the second message does not carry the identifier of the second service, the identifier of the first faulty link, or the routing information of the second restoration path is similar to that the first message does not carry the identifier of the first service, the identifier of the first faulty link, or the routing information of the first restoration path. Details are not described herein again.

Further, the first message and/or the second message may further carry routing information of the restoration path segment, so that the first head node and/or the second head node learns that the first ID indicates which restoration path segment is used to perform service restoration for the first working path and the second working path.

In this embodiment of this application, the first ID and the routing information of the restoration path segment may be referred to as extended TLV information. The TLV is a variable format, which means: type (type), length (length), and value (value), where the type field is information about a label and an encoding format, the length field is a length of a defined value, and the value field indicates an actual value. Lengths of the type field and the length field are generally fixed, for example, two or four bytes.

Packet formats of the first message and the second message in this application may be shown as follows:

```
           <PCUpd Message>::=<Message Common Header>
           <SRP object>
           <LSP object>
          New <service group ID> TLV "Add TLV
information of the service group ID bundled and mapped to
 this service to a service object attribute,
where the TLV information has a length of four bytes"
           <ERO object>
          New <segment restoration path> TLV "Optional
information: TLV information of a segment restoration
          path corresponding to the service group ID"
```

A message format of the service group ID is shown in FIG. 5. FIG. 5 is a schematic diagram of a format of a first ID message according to an embodiment of this application. Definitions and values of fields included in FIG. 5 are shown in Table 1.

**Table 1**

| Field name | Definition | Value |
|---|---|---|
| Type | A TLV type; a type of a new service group ID | A 16-bit value |
| Length | A TLV length, in bytes | A 16-bit value |
| Service Group ID | A service group ID | A 32-bit value |

An information format of an overlapped restoration path is shown in FIG. 6. FIG. 6 is a schematic diagram of a format of routing information of a restoration path segment according to an embodiment of this application. Definitions and values of fields included in FIG. 6 are shown in Table 2.

**Table 2**

| Field name | Definition | Value |
|---|---|---|
| Type | A TLV type, and a hop type | A 16-bit value |
| Length | A TLV length, in bytes | A 16-bit value |
| Router_Id | A node ID, in bytes | A 32-bit value |
| If_Id | A link index ID, in bytes | A 16-bit value |
| Label | A slot channel/wavelength, in bytes | A 16-bit value |
| Hop_Type | It is indicated by adding a segment restoration path hop type, in bytes | A 32-bit value |

After the network device notifies the first head node and the second head node of the first ID, in Manner 1, to quickly implement service restoration in a subsequent service restoration process, a resource may be pre-configured for a node of the restoration path segment, so that when the first working path and the second working path are faulty, the node of the restoration path segment can quickly implement service restoration based on the pre-configured resource.

In Manner 1, a node resource pre-configuration on the restoration path segment includes the following two possible implementations, either of which may be implemented:
Implementation 1: The network device pre-configures a resource for a node of the restoration path segment.

In Implementation 1, the method procedure described in FIG. 4(a) further includes S440. S440: The network device sends a third configuration message to a node (the third node, the fourth node, and the fifth node shown in FIG. 4(a)) of the restoration path segment. The third configuration message carries a channel resource of the restoration path segment in the first restoration path and a channel resource of the restoration path segment in the second restoration path.

For example, the third configuration message may be a PCEP message, the third configuration message may be a protocol message having a same function as that of a PCEP message, or the third configuration message may be implemented by using a new field (for example, an extended PCEP field) in signaling transmitted by the network device along the restoration path segment.

Further, the third configuration message may further include at least one of the identifier of the first service, the identifier of the second service, the routing information of the restoration path segment, and the first ID.

It may be understood that, when the third configuration message includes the first ID, the network device may not need to send the first configuration message to the head node of the restoration path segment. Similarly, when the third configuration message includes the routing information of the restoration path segment, the network device may not need to send the second configuration message to the head node of the restoration path segment. The third configuration message may further carry the first ID and the routing information of the restoration path segment. In this case, it may be understood that the first configuration message and the second configuration message do not need to be sent, or it may be understood that the first configuration message, the second configuration message, and the third configuration message are a same message (for example, the third configuration message carries the first ID, the routing information of the restoration path segment, the channel resource of the restoration path segment in the first restoration path, and the channel resource of the restoration path segment in the second restoration path).

It should be noted that the third node is the head node of the restoration path segment, the fourth node is the last node of the restoration path segment, and the fifth node is an intermediate node of the restoration path segment. There may be a plurality of fifth nodes. In other words, there may be a plurality of intermediate nodes of the restoration path segment.

A packet format of the third configuration message may be shown as follows:

```
           <PCUpd Message>::=<Message Common Header>
           <SRP object>
           <LSP object> "Add an LSP pre-configuration type to an extended flag operation type"
          New <service group ID> TLV "Add TLV
information of the service group ID bundled and mapped to
 this service to a service object attribute,
where the TLV information has a length of four bytes"
           <ERO object>
```

A message format of the first ID is shown in FIG. 5. Definitions and values of fields included in FIG. 5 are shown in Table 1, and details are not described herein again.

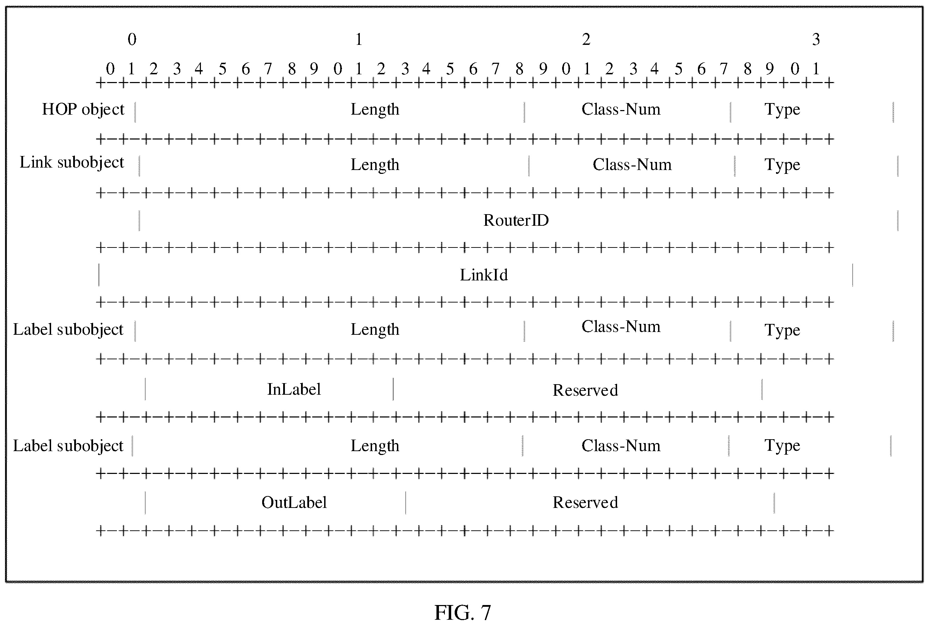

A format of the third configuration message is shown in FIG. 7. FIG. 7 is a schematic diagram of a format of a third configuration message according to an embodiment of this application. Definitions and values of fields included in FIG. 7 are shown in Table 3.

**Table 3**

| Field name | Definition | Value |
|---|---|---|
| Flags | An extended operation type: a resource pre-configuration type field is added, in bytes | A 16-bit value |
| Object class | An object category, in bytes | An 8-bit value |
| Object_type | An object type, in bytes | A 4-bit value |
| Object_length | An object length, in bytes | A 16-bit value |
| Request-ID-number | A request ID, in bytes | A 32-bit value |
| Optional TLVs | Optional TLVs | A 32-bit value |

Implementation 2: A head node of a working path pre-configures a resource for a node of the restoration path segment. The first head node and the second head node respectively pre-configure a resource for a node of the restoration path segment. In Implementation 2, the method procedure described in FIG. 4(a) further includes S441. S441: The first head node sends a fifth configuration message to a node (the third node, the fourth node, and the fifth node shown in FIG. 4(a)) of the restoration path segment. The fifth configuration message carries the channel resource of the restoration path segment in the first restoration path.

For example, the fifth configuration message may further include the identifier of the first service and/or the first ID.

It may be understood that, when the fifth configuration message includes the first ID, the network device may not need to send the first configuration message to the head node of the restoration path segment.

For example, the fifth configuration message may be an RSVP path message, a message having a function similar to that of an RSVP path message, or other signaling transmitted by the first head node along the first restoration path.

It should be noted that the first head node may further send the fifth configuration message to another node (a node other than a node of the restoration path segment) of the first restoration path. Because this embodiment of this application mainly relates to an execution step performed by a node of the restoration path segment when the first link is faulty, specific content included in the fifth configuration message received by the another node of the first restoration path is not described in detail.

Similarly, in this implementation, the method procedure described in FIG. 4(a) further includes S442. S442: The second head node sends a sixth configuration message to a node (the third node, the fourth node, and the fifth node shown in FIG. 4(a)) of the restoration path segment. The sixth configuration message carries the channel resource of the restoration path segment in the second restoration path.

For example, the sixth configuration message may further include the identifier of the second service and/or the first ID.

It may be understood that, when the sixth configuration message includes the first ID, the network device may not need to send the first configuration message to the head node of the restoration path segment.

For example, the sixth configuration message may be an RSVP path message, a message having a function similar to that of an RSVP path message, or other signaling transmitted by the second head node along the second restoration path.

It should be noted that the second head node may further send the sixth configuration message to another node (a node other than a node of the restoration path segment) of the second restoration path. Because this embodiment of this application mainly relates to an execution step performed by a node of the restoration path segment when the first link is faulty, specific content included in the sixth configuration message received by the another node of the second restoration path is not described in detail.

A packet format of the fifth configuration message or the sixth configuration message is specifically shown as follows:

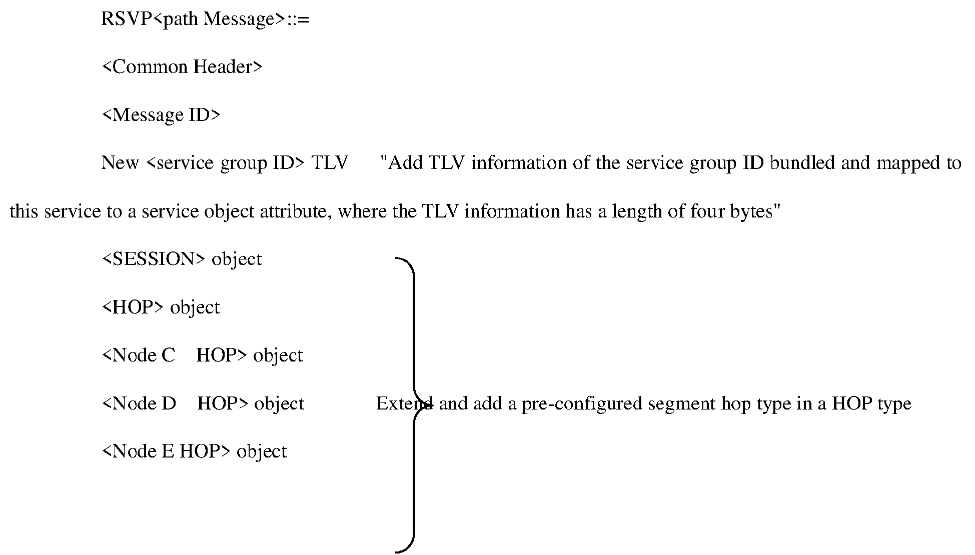

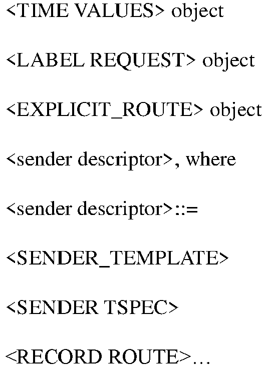

A message format of the first ID is shown in FIG. 5. Definitions and values of fields included in FIG. 5 are shown in Table 1, and details are not described herein again.

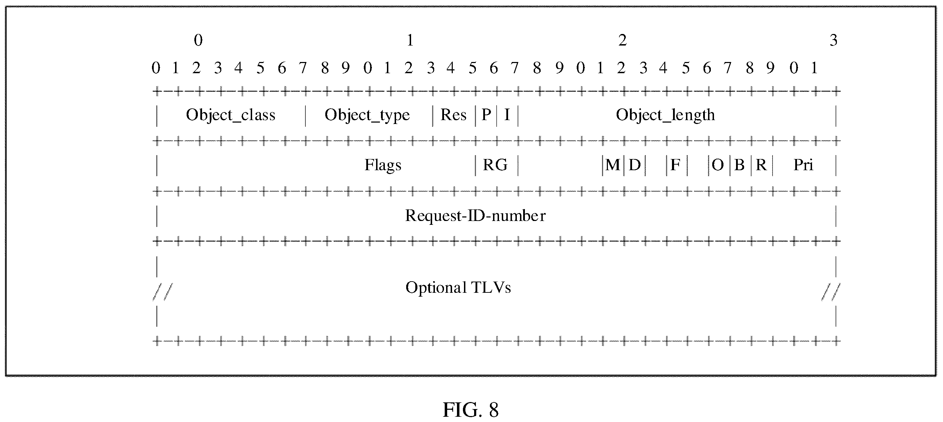

A format of the fifth configuration message or the sixth configuration message is shown in FIG. 8, and is implemented by extending the hop type. FIG. 8 is a schematic diagram of a message format of a fifth configuration message or a sixth configuration message according to an embodiment of this application. Definitions and values of fields included in FIG. 8 are shown in Table 4.

**Table 4**

| Field name | Definition | Value |
|---|---|---|
| Length | A total object length, in bytes | A 16-bit value |
| Class-Num | An identifier object class: each object class has a name | An 8-bit value |
| Type | An object type; the Class-Num field is unique, an extended field value indicates a pre-configured resource hop type | An 8-bit value |
| RouterID | A node ID address | A 32-bit value |
| LinkID | An egress link ID | A 32-bit value |
| InLabel | An incoming label, indicating a channel/wavelength | A 16-bit value |
| Reserved | A reserved byte | A 16-bit value |
| OutLabel | An outgoing label, indicating a channel/wavelength | A 16-bit value |
| Reserved | A reserved byte | A 16-bit value |

The restoration path configuration method provided in this application may further configure a path restoration capability for the head node and the last node of the restoration path segment.

It should be noted that, in this embodiment of this application, a sequence of configuring the path restoration capability for the head node and the last node of the restoration path segment and pre-configuring a resource for a node of the restoration path segment is not limited. For example, the path restoration capability may be first configured for the head node and the last node of the restoration path segment, and then a resource is pre-configured for a node of the restoration path segment. For another example, a resource may be first pre-configured for a node of the restoration path segment, and then the path restoration capability is configured for the head node and the last node of the restoration path segment. For still another example, a resource may be pre-configured for a node of the restoration path segment, and the path restoration capability may be configured for the head node and the last node of the restoration path segment at the same time.

Specifically, in Manner 1, in this embodiment of this application, configuring the restoration capability for the head node and the last node of the restoration path segment includes the following two possible implementations, either of which may be implemented:
Implementation 1: The network device configures the path restoration capability for the head node and the last node of the restoration path segment. In Manner 1, the method procedure described in FIG. 4(a) further includes S450. S450: The network device sends a fourth configuration message to an end node (the third node and the fourth node shown in FIG. 4(a)) of the restoration path segment. The fourth configuration message carries a type of the end node. The type of the end node includes the head node of the restoration path segment and a last node of the restoration path segment, and the head node of the restoration path segment or the last node of the restoration path segment has a path restoration capability.

The type of the end node can be used to determine that the end node has the path restoration capability. For example, after receiving the fourth configuration message, the head node of the restoration path segment can determine, based on the head node whose end node type is the head node of the restoration path segment, that the head node has the path restoration capability. For another example, after receiving the fourth configuration message, the last node of the restoration path segment can determine, based on the last node whose end node type is the last node of the restoration path segment, that the last node has the path restoration capability.

For example, the fourth configuration message may be a PCEP message, the fourth configuration message may be a protocol message having a same function as that of a PCEP message, or the fourth configuration message may be implemented by using a new field (for example, an extended PCEP field) in signaling transmitted by the network device along the restoration path segment.

Further, the fourth configuration message may further include at least one of the identifier of the first faulty link, the routing information of the restoration path segment, the identifier of the first service, the identifier of the second service, and the first ID.

When the fourth configuration message includes the identifier of the first faulty link and the routing information of the restoration path segment, the third node may store, after receiving the fourth configuration message and based on the end node type of the third node, the identifier of the first faulty link, the routing information of the restoration path segment, and an identifier indicating that the third node has the path restoration capability. The identifier indicating that the third node has the path restoration capability may be an identifier of the head node of the restoration path segment or another field.

Similarly, the fourth node may store, after receiving the fourth configuration message and based on the end node type of the fourth node, the identifier of the first faulty link, the routing information of the restoration path segment, and an identifier indicating that the fourth node has the path restoration capability. The identifier indicating that the fourth node has the path restoration capability may be an identifier of the last node of the restoration path segment or another field.

The third configuration message and the fourth configuration message may be a same message, or the third configuration message and the fourth configuration message may be two different messages. This is not limited in this application.

For example, when a node of the first faulty link does not have the service restoration capability, the network device may further send the identifier (for example, an identifier of the third node) of the head node of the restoration path segment to the node of the first faulty link, to notify the node of the first faulty link of the head node of the restoration path segment that has the path restoration capability.

For example, the node of the first faulty link does not need to be notified of the identifier of the head node of the restoration path segment. When the first faulty link is faulty, and the node of the first faulty link learns that the node of the first faulty link does not have the path restoration capability, the node of the first faulty link may send a fault notification to an upstream node of the node of the first faulty link (for example, in a single hop (hop) transmission manner) until the fault notification is transmitted to the head node of the restoration path segment that has the path restoration capability.

Implementation 2: The first head node and the second head node configure a restoration capability for the head node and the last node of the restoration path segment. In Implementation 2, the method procedure in FIG. 4 further includes S451. S451: The first head node sends a seventh configuration message to an end node (the third node and the fourth node shown in FIG. 4(a)) of the restoration path segment. The seventh configuration message carries a type of the end node. The type of the end node includes the head node of the restoration path segment and the last node of the restoration path segment.

The type of the end node can be used to determine that the end node has the path restoration capability.

For example, the seventh configuration message may be an RSVP path message, the seventh configuration message may be a protocol message having a same function as that of an RSVP path message, or the seventh configuration message is other signaling transmitted by the first head node along the first working path.

Further, the seventh configuration message may further include at least one of the identifier of the first faulty link, the routing information of the restoration path segment, the identifier of the second service, and the first ID.

When the seventh configuration message includes the identifier of the first faulty link and the routing information of the restoration path segment, the third node may store, after receiving the seventh configuration message and based on the end node type of the third node, the identifier of the first faulty link, the routing information of the restoration path segment, and an identifier indicating that the third node has the path restoration capability. The identifier indicating that the third node has the path restoration capability may be an identifier of the head node of the restoration path segment or another field.

Similarly, the fourth node may store, after receiving the seventh configuration message and based on the end node type of the fourth node, the identifier of the first faulty link, the routing information of the restoration path segment, and an identifier indicating that the fourth node has the path restoration capability. The identifier indicating that the fourth node has the path restoration capability may be an identifier of the last node of the restoration path segment or another field.

It may be understood that, when the seventh configuration message includes the first ID, the network device may not need to send the first configuration message to the head node of the restoration path segment.

It should be noted that the first head node may further send the seventh configuration message to another node (a node other than a node of the restoration path segment) of the first working path. Because this embodiment of this application mainly relates to an execution step performed by a node of the restoration path segment when the first link is faulty, specific content included in the seventh configuration message received by the another node of the first working path is not described in detail.

Similarly, in Manner 2, the method procedure in FIG. 4 may further include S452. S452: The second head node sends an eighth configuration message to an end node (the third node and the fourth node shown in FIG. 4(a)) of the restoration path segment. The eighth configuration message carries a type of the end node. The type of the end node includes the head node of the restoration path segment and the last node of the restoration path segment.

The type of the end node can be used to determine that the end node has the path restoration capability.

For example, the eighth configuration message may be an RSVP path message, the eighth configuration message may be a protocol message having a same function as that of an RSVP path message, or the eighth configuration message is other signaling transmitted by the second head node along the second working path.

Further, the eighth configuration message may further include at least one of the identifier of the first faulty link, the routing information of the restoration path segment, the identifier of the second service, and the first ID.

When the eighth configuration message includes the identifier of the first faulty link and the routing information of the restoration path segment, the third node may store, after receiving the eighth configuration message and based on the end node type of the third node, the identifier of the first faulty link, the routing information of the restoration path segment, and an identifier indicating that the third node has the path restoration capability. The identifier indicating that the third node has the path restoration capability may be an identifier of the head node of the restoration path segment or another field.

Similarly, the fourth node may store, after receiving the eighth configuration message and based on the end node type of the fourth node, the identifier of the first faulty link, the routing information of the restoration path segment, and an identifier indicating that the fourth node has the path restoration capability. The identifier indicating that the fourth node has the path restoration capability may be an identifier of the last node of the restoration path segment or another field.

It may be understood that, when the eighth configuration message includes the first ID, the network device may not need to send the first configuration message to the head node of the restoration path segment.

It should be noted that the second head node may further send the eighth configuration message to another node (a node other than a node of the restoration path segment) of the second working path. Because this embodiment of this application mainly relates to an execution step performed by a node of the restoration path segment when the first link is faulty, specific content included in the eighth configuration message received by the another node of the second working path is not described in detail.

It should be understood that when the head nodes of the first service and the second service are the third node, and the last nodes of the first service and the second service are the fourth node, S451 and S452 may not need to be performed.

It should be further understood that S451 and S452 indicate that head nodes of different working paths perform end node capability configuration on a restoration path segment, and either S451 or S452 may be performed to complete the capability configuration, or both S451 and S452 may be performed.

Manner 2: The network device is the head node of the first working path

If the network device is the head node of the first working path, the head node of the first working path can learn of the first ID. Different from Manner 1, in Manner 2, the network device does not need to send the first message to the first head node. In other words, S432 does not need to be performed.

Other resource pre-configuration procedures and path restoration capability configuration procedures of the head node and the last node of the restoration path segment are the same as those in Manner 1. Details are not described herein again.

Method 3: The network device is the head node of the second working path

If the network device is the head node of the second working path, the head node of the second working path can learn of the first ID. Different from Manner 1, in Manner 3, the network device does not need to send the second message to the second head node. In other words, S433 does not need to be performed.

Other resource pre-configuration procedures and path restoration capability configuration procedures of the head node and the last node of the restoration path segment are the same as those in Manner 1. Details are not described herein again.

Manner 4: The network device is the head node of the restoration path segment

If the network device is the head node of the restoration path segment, the head node of the restoration path segment can learn of the first ID, the routing information of the restoration path segment, and the routing information of the restoration path. Different from Manner 1, in Manner 4, the network device does not need to send a configuration message to the head node of the restoration path segment. In other words, the network device does not need to send the first configuration message, the second configuration message, the third configuration message, or the fourth configuration message to the head node of the restoration path segment.

A signaling interaction procedure between another node (the first head node, the second head node, and the last node of the restoration path segment) and the network device is the same as that in Manner 1. Details are not described herein again.

Method 5: The network device is the last node of the restoration path segment

If the network device is the last node of the restoration path segment, the last node of the restoration path segment can learn of the first ID, the routing information of the restoration path segment, and the routing information of the restoration path. Different from Manner 1, in Manner 5, the network device does not need to send a configuration message to the last node of the restoration path segment. In other words, the network device does not need to send the third configuration message and the fourth configuration message to the last node of the restoration path segment.

A signaling interaction procedure between another node (the first head node, the second head node, and the last node of the restoration path segment) and the network device is the same as that in Manner 1. Details are not described herein again.

Specifically, according to the restoration path configuration method provided in this embodiment of this application, service restoration can be implemented when a link is faulty. The method procedure shown in FIG. 4(a) further includes service restoration.

In this embodiment of this application, a node that determines that the first working path and the second working path are faulty may be a node of the first faulty link.

Based on a relationship between the node of the first faulty link and the third node, and a relationship between the node of the first faulty link and the fourth node, the foregoing service restoration includes the following several possible implementations.

Implementation 1: Nodes at two ends of the first faulty link may respectively be the third node and the fourth node. The method procedure shown in FIG. 4(a) further includes S460. S460: The third node perceives that the first faulty link is faulty, and determines that the first service and the second service are affected. It can be learned from the foregoing procedure that, if the third node is configured with the restoration capability, the third node determines that the fault notification does not need to be sent to the first head node and the second head node.

S461: The third node sends a path establishment request message to an adjacent downstream node of the restoration path segment. The path establishment request message includes the first ID.

Further, the path establishment request message further includes the routing information of the restoration path segment, so that the intermediate node and the last node of the restoration path segment can learn of information of the entire restoration path segment.

For example, the path establishment request message may be an RSVP path message, a message having a function similar to that of an RSVP path message, or other signaling transmitted by the third node along the restoration path segment.

In addition, it can be learned from the foregoing description that the network device in this embodiment of this application may be the head node of the restoration path segment. When the network device determines that the first working path and the second working path are faulty, the network device sends the path establishment request message to an adjacent downstream node of the restoration path segment.

In Implementation 1, the third node initiates the path establishment request message along the restoration path segment, and nodes (the third node, the fourth node, and the fifth node) of the restoration path segment determine respective reserved resources of the third node, the fourth node, and the fifth node based on the first ID in the path establishment request message, establish cross-connections based on the reserved resources, and establish a path.

In a possible implementation, the third node may send a path establishment response message to the network device. The path establishment response message indicates a service restoration result of the first working path and a service restoration result of the second working path. In this manner, the method procedure shown in FIG. 4(a) further includes S462. S462: The third node sends the path establishment response message to the network device.

In another possible implementation, the third node may separately send a path establishment response message to the first head node and the second head node. In this manner, the method procedure shown in FIG. 4(a) further includes S463 and S464. S463: The third node sends a path establishment response message to the first head node. S464: The third node sends a path establishment response message to the second head node.

Optionally, after the service restoration succeeds, the first ID may be updated. For example, a node of the restoration path segment may receive a first update message and a second update message respectively sent by the first head node and the second head node. The first update message and the second update message respectively indicate the node of the restoration path segment to update the first working path and the second working path that carry the first service and the second service (for example, the first restoration path carries the first service and the second restoration path carries the second service), and to delete the locally stored first ID. For another example, a node of the restoration path segment may receive a third update message sent by the network device. The third update message indicates the node of the restoration path segment to update the first working path and the second working path that carry the first service and the second service (for example, the first restoration path carries the first service and the second restoration path carries the second service), and to delete the locally stored first ID.

Implementation 2: The node of the first faulty link is not the third node, and the last node of the first faulty link is the fourth node. The method procedure shown in FIG. 4(a) further includes S470. S470: The node of the first faulty link perceives that the first faulty link is faulty, and determines that the first working path and the second working path are faulty. It can be learned from the foregoing procedure that, if the third node is configured with the restoration capability, and the node of the first faulty link is not configured with the restoration capability. In Implementation 2, the node of the first faulty link determines that the fault notification needs to be sent to the third node.

The method procedure shown in FIG. 4(a) further includes S471. S471: The third node receives fault notification information.

Specifically, after the third node learns that the first faulty link is faulty, an execution procedure is the same as that in Implementation 1, and details are not described herein again.

The network device may further update, based on changes of restoration paths corresponding to different working paths, a restoration path group to which the restoration paths belong.

For example, when a node resource on the first restoration path changes, the first restoration path cannot restore a service carried on the first working path. In this case, the network device re-determines a third restoration path corresponding to the first working path, and the network device node determines, based on the third restoration path, that the third restoration path belongs to a second third restoration path group. An identifier of the second third restoration path group is the second ID.

With reference to a specific scenario, the following describes the method procedure shown in FIG. 4(a). In the following scenario, the procedure shown in Manner 1 in FIG. 4(a) is mainly considered.

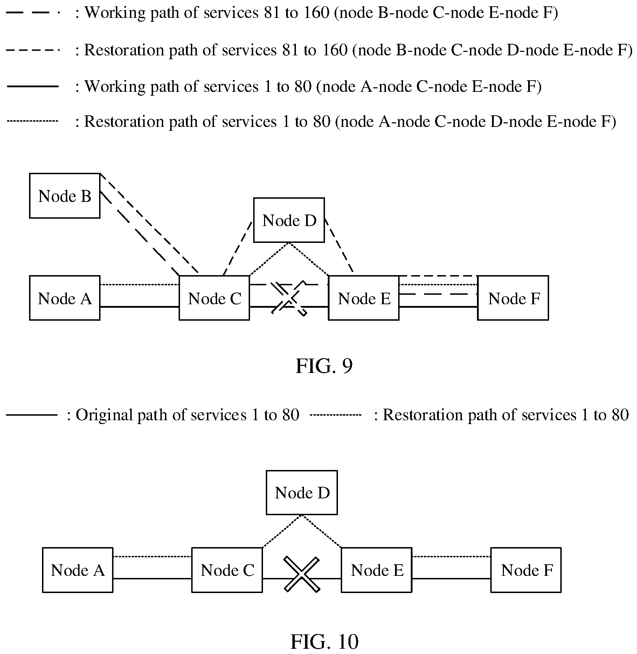

FIG. 9 is a diagram of a scenario to which a restoration path configuration method can be applied according to an embodiment of this application.

An ASON shown in FIG. 9 includes six ASON nodes: a node A, a node B, a node C, a node D, a node E, and a node F, and 160 services.

Working paths that carry the services 1 to 80 are the same: node A-node C-node E-node F, and working paths that carry the services 81 to 160 are the same: node B-node C-node E-node F. The first service may be considered as any one or more services in the services 1 to 80, and the second service may be considered as any one or more services in the services 81 to 160. Alternatively, the second service may be considered as any one or more services in the services 1 to 80, and the first service may be considered as any one or more services in the services 81 to 160.

When the first service is any one or more of the services 1 to 80, and the second service is any one or more of the services 81 to 160, the first working path is node A-node C-node E-node F, and the second working path is node B-node C-node E-node F. The first working path includes at least one of the following links: a link A-C, a link C-E, and a link E-F, and the second working path includes at least one of the following links: a link B-C, a link C-E, and a link E-F.

When the second service is any one or more of the services 1 to 80, and the first service is any one or more of the services 81 to 160, the second working path is node A-node C-node E-node F, and the first working path is node B-node C-node E-node F. The second working path includes at least one of the following links: a link A-C, a link C-E, and a link E-F, and the first working path includes at least one of the following links: a link B-C, a link C-E, and a link E-F.

For example, the first faulty link is the link C-E included in both the first working path and the second working path. For example, one or more of the following faults occur: a transmission optical fiber cut in the link C-E, or a fault in an interface that is in the node C and that sends information to the node E, or a fault in an interface that is in the node E and that sends information to the node C.

In the scenario shown in FIG. 9, the restoration path configuration method provided in an embodiment of this application includes the following steps.

### Step 1:

The network device determines, based on the fault of the link C-E, that a restoration path corresponding to a working path carrying services 1 to 80 is node A-node C-node D-node E-node F, and a restoration path corresponding to a working path carrying services 81 to 160 is node B-node C-node D-node E-node F. In other words, the first restoration path is node A-node C-node D-node E-node F, and the second restoration path is node B-node C-node D-node E-node F.

The network device determines, based on the first restoration path and the second restoration path, that the first restoration path and the second restoration path have a same restoration path segment: node C-node D-node E. Because the restoration path segment node C-node D-node E occupies a segment path in the first restoration path and the second restoration path, in the embodiment shown in FIG. 9, the restoration path segment may also be referred to as a segment restoration path. The third node is node C, the fifth node is node D, and the fourth node is node E.

On a premise that the first restoration path and the second restoration path have the same restoration path segment node C-node D-node E, the network device generates an ID 1. The ID 1 indicates to use the restoration path segment node C-node D-node E to perform service restoration for the services 1 to 80 carried on the first working path and the services 81 to 160 carried on the second working path. It may be understood that the network device associates and identifies, by using the service group ID 1, the same restoration path segment that the restoration paths corresponding to the services 1 to 160 have.

### Step 2:

The network device uses the PCEP to issue routing information of the restoration paths and the service group ID to the head nodes of the working paths.

Specifically, the network device issues a PCEP message by using the PCEP to notify the head nodes of the working paths of the routing information of the restoration paths. The PCEP message carries the label switched path (label switch path, LSP) ID of the service, an identifier of the faulty link (for example, the link C-E), and the routing information of the restoration paths corresponding to the service.

Further, the PCEP message further needs to carry the service group ID 1, and may further carry routing information of the restoration path segment (node C-node D-node E).
(1) The PCEP message sent by the network device to the head node (the node A) of the first working path carrying the services 1 to 80 carries: LSP IDs respectively corresponding to the services 1 to 80 (for example, if the LSP ID of the service 1 is 1, the LSP ID of the service 2 is 2, ..., the LSP ID of the service 79 is 79, and the LSP ID of the service 80 is 80, the PCEP message carries the LSP IDs 1 to 80), the identifier C-E of the first faulty link, routing information of the first restoration path (node A-node C-node D-node E-node F), and the service group ID (for example, ID 1). In addition, optionally, the PCEP message may further carry the routing information of the restoration path segment (node C-node D-node E).
(2) The PCEP message sent by the network device to the head node (the node B) of the second working path carrying the services 81 to 160 carries: LSP IDs respectively corresponding to the services 81 to 160 (for example, if the LSP ID of the service 81 is 81, the LSP ID of the service 82 is 82, ..., the LSP ID of the service 159 is 159, and the LSP ID of the service 160 is 160, the PCEP message carries the LSP IDs 81 to 160), the identifier C-E of the first faulty link, routing information of the second restoration path (node B -node C-node D-node E-node F), and the service group ID (for example, ID 1). In addition, optionally, the PCEP message may further carry the routing information of the restoration path segment (node C-node D-node E).

Further, after the head node of the first working path and the head node of the second working path are notified of the ID 1, the head node and the last node of the restoration path segment needs to be notified of the ID 1. Specifically, a restoration capability further needs to be configured for the head node and the last node of the restoration path segment.

### Step 3:

Configure path restoration capabilities of the head node and the last node (for example, the node C and the node E shown in FIG. 9) of the restoration path segment in the working paths (for example, node A-node C-node E-node F and node B-node C-node E-node F shown in FIG. 9) by using the RSVP.

After the head node-node A of the first working path carrying the services 1 to 80 and the head node-node B of the second working path carrying the services 81 to 160 receive the PCEP message issued by the network device, the node A and the node B may obtain information such as: the identifier C-E of the first faulty link, that the node C and the node E have path restoration capabilities, and that the restoration path segment is node C-node D-node E.

Optionally, that the node C and the node E have path restoration capabilities may also be directly configured by the network device to the node C and the node E by using a PCEP message.

In the standard, the node C is referred to as a fork node, and the node E is referred to as a merge node. In this application, the fork node may also be referred to as the head node of the segment restoration path, and the merge node is referred to as the last node of the segment restoration path.

The following describes in detail steps that need to be performed or information received by each node of the working paths that carry the services 1 to 80 and the services 81 to 160.

Node A initiates path restoration capability configuration with the head node being the node A and the last node being the node F by using an RSVP path message. The RSVP path message carries the LSP IDs of the services 1 to 80, and path restoration capability configuration information of the node C and the node E.

The configuration information received by the node C includes: the identifier C-E of the first faulty link, the routing information (node C-node D-node E) of the restoration path segment, and head node identifier information of the restoration path segment.

The configuration information received by the node E includes: the identifier C-E of the first faulty link, the routing information (node C-node D-node E) of the restoration path segment, and last node identifier information of the restoration path segment.

The configuration information received by the node F includes: the LSP IDs of the services 1 to 80.

Node B initiates path restoration capability configuration with the head node being the node B and the last node being the node F by using an RSVP path message. The RSVP path message carries same configuration information to each node and the head node A. Details are not described herein again.

After receiving the RSVP path message initiated for each service, the node C stores the identifier C-E of the first faulty link, the routing information (node C-node D-node E) of the restoration path segment, and the head node identifier information of the restoration path segment based on the path restoration capability configuration information. In this case, the node C does not perform cross-connection configuration. Because the node C is the head node of the restoration path segment, the node C needs to store channel resources (for example, channel resources of the node C, the node D, and the node E) of all nodes of the restoration path segment.

After receiving the RSVP path message initiated for each service, the node E stores the identifier C-E of the first faulty link, the routing information (node C-node D-node E) of the restoration path segment, and the last node identifier information of the restoration path segment based on the path restoration capability configuration information. In this case, the node E does not perform cross-connection configuration. Because the node E is the last node of the segment restoration path, the node E only needs to store a channel resource of the last node of the restoration path segment.

The node F does not need path restoration capability configuration, and the specific steps performed by the node F after receiving the RSVP path message initiated for each service are not described herein again.

In a possible implementation, after each node of the working paths is configured, the method further includes resource pre-configuration.

### Step 4(a):

Add the RSVP to pre-configure a node resource on the restoration path segment.

Specifically, the head node-node A of the working path carrying the services 1 to 80 completes pre-configuration of a node resource on the restoration path segment in the first restoration path (node A-node C-node D-node E-node F) by using an RSVP path message.

For example, the node A initiates resource pre-configuration with the head node being the node A and the last node being the node F by using an RSVP path message. The RSVP path message carries the LSP IDs of the services 1 to 80, a service restoration slot channel/wavelength resource of the node D, the service group ID, and indication information of resource pre-configuration (not actual establishment of the service). The service group ID and the indication information of resource pre-configuration may be referred to as extended TLV information.

The service group ID may also be configured on the node C and the node E in the foregoing step 3. If the node C and the node E have been notified of the service group ID in step 3, the service group ID needs to be configured only for the node D in step 4(a).

After receiving the RSVP path message, the node C parses the RSVP path message, obtains the LSP IDs of the services 1 to 80, and the service group ID information, and performs local storage. Because the message indicates resource pre-configuration, the node C does not perform cross-connection configuration after parsing the RSVP path message.

After receiving the RSVP path message, the node D parses the RSVP path message, obtains the LSP IDs of the services 1 to 80, the service group ID, and the restoration slot channel/wavelength resource (the intermediate node D only needs to store the resource of the intermediate node D on the restoration path segment), and performs local storage. Because the message indicates resource pre-configuration, the node D does not perform cross-connection configuration after parsing the RSVP path message.

After receiving the RSVP path message, the node E performs same processing performed by the node C, and details are not described herein again.

After the node F receives the RSVP path message, because no segment restoration service configuration is performed for the node F, the node F directly responds to the RESV message, and indicates that the RSVP path message is successfully received.

Further, the head node-node B of the second working path carrying the services 81 to 160 completes pre-configuration of a node resource on the restoration path segment in the second restoration path (node B -node C-node D-node E-node F) by using an RSVP path message. A specific procedure is similar to that in which the node A completes pre-configuration of a node resource on the restoration path segment in the first restoration path (node A-node C-node D-node E-node F), and details are not described herein again.

In another possible implementation, after each node of the working paths is configured, the method further includes resource pre-configuration.

### Step 4(b):

The network device directly pre-configures a node resource on the restoration path segment by using a PCEP message.

Specifically, each node of the restoration path segment (for example, node C-node D-node E) is pre-configured. The PCEP message carries the LSP IDs of services 1 to 160, a restoration slot channel/wavelength resource, the service group ID, and indication information of resource pre-configuration (not actual establishment of the service). The service group ID and the indication information of resource pre-configuration may be referred to as extended TLV information.

The service group ID may also be configured on the node C and the node E in the foregoing step 3. If the node C and the node E have been notified of the service group ID in step 3, the service group ID needs to be configured only for the node D in step 4(b).

Specifically, when a link is faulty, the rerouting method provided in this embodiment of this application may further implement service restoration.

The service restoration includes the following steps.

### Step 1:

When the link between the node C and the node E is faulty (for example, a fiber cut occurs between the node C and the node E), the node C perceives the fault, and finds the ID of the affected service group based on an identifier of the faulty link between the node C and the node E. Further, if it is determined that the node C corresponding to the faulty link has the path restoration capability, an alarm is suppressed from being notified to the head nodes (for example, the node A and the node B) of the working paths that carry the affected services. In other words, the notify message does not need to be sent to the head nodes of the working paths, thereby reducing a notification time period.

### Step 2:

The node C initiates a restoration path segment (node C-node D-node E) establishment process.

Specifically, this process includes:
The head node-node C of the restoration path segment initiates establishment of the restoration path segment with the head node being node C and the last node being node E by using an RSVP path message. The RSVP path message carries the service group ID and the routing information (node C-node D-node E) of the restoration path segment. A packet format of the RSVP path message is the same as the packet format of the RSVP path message shown in step 4(a), and details are not described herein again.

The head node-node C of the restoration path segment matches and finds an associated restoration slot channel/wavelength resource of the services 1 to 160 based on the service group ID, and reserves the resource. After receiving the Resv message, the node C establishes cross-connections of the batch services 1 to 160. Alternatively, the cross-connections of the batch services 1 to 160 may be established before the Resv message is received. A sequence between receiving the Resv message and establishing the cross-connections by the node C is not limited in this application.

After receiving the RSVP path message, the intermediate node-node D of the restoration path segment matches and finds an associated restoration slot channel/wavelength resource of the services 1 to 160 based on the service group ID, and reserves the resource. After receiving the Resv message, the node D establishes cross-connections of the batch services 1 to 160. Alternatively, the cross-connections of the batch services 1 to 160 may be established before the Resv message is received. A sequence between receiving the Resv message and establishing the cross-connections by the node D is not limited in this application.

After receiving the RSVP path message, the last node-node E of the restoration path segment matches and finds an associated restoration slot channel/wavelength resource of the services 1 to 160 based on the service group ID, reserves the resource, and establishes cross-connections of the batch services 1 to 160. In addition, the node E sends a Resv message to respond to the head node of the segment restoration path that Resv succeeds.

### Step 3:

After successfully establishing the restoration path segment (node C-node D-node E), the node C notifies head nodes (for example, the node A and the node B) of working paths on which all services associated with the service group ID are carried of restoration success of the restoration path segment. The notify message carries the identifier of the faulty link, indication information of the restoration success of the restoration path segment, and routing information of the restoration path segment.

### Step 4:

After receiving the notify message sent by the node C indicating the restoration success of the restoration path segment, the head nodes (for example, the node A and the node B) of the working paths on which services (for example, the services 1 to 160) are carried match and find restoration paths based on the identifier of the faulty link and the routing information of the restoration path segment, and take over the services.
(1) The node A initiates path message updating along the first restoration path (node A-node C-node E-node F). The path message updating indicates a node other than the head node of the first restoration path corresponding to the services 1 to 80 to delete, based on a service attribute, the service group ID currently configured for the services 1 to 80. Similarly, the node B initiates path message updating along the second restoration path (node B-node C-node E-node F). The path message updating indicates a node other than the head node of the second restoration path corresponding to the services 81 to 160 to delete, based on a service attribute, the service group ID currently configured for the services 81 to 160.
(2) The intermediate nodes and the last node (node C, node E, and node F) of the first working path that carries the services 1 to 80 update an end-to-end service attribute and delete the locally stored service group ID information. Similarly, the intermediate nodes and the last node (node C, node E, and node F) of the second working path that carries the services 81 to 160 update an end-to-end service attribute and delete the locally stored service group ID information.

### Step 5:

After all service restoration paths are successfully changed, the network device automatically collects information about working paths of network-wide services, and issues, based on updated changes of current paths of the services, a deletion message to the head nodes (for example, node A and node B) of the working paths that carry the services. After receiving the deletion message, the head nodes locally delete the original service group ID (for example, ID 1).

### Step 6:

When a network resource changes, the network device collects network-wide link information in real time, re-computes a restoration path corresponding to a service affected by the link resource change, updates and modifies the service group ID, and issues an updated service group ID to the head node of the working path that carries the service for configuring and updating the service group ID.

As shown in FIG. 9, a fast rerouting process of bundle mapping of an entire segment mainly includes the following three key points: (1) Same restoration path policy computation is performed based on services affected by a same faulty link, and services respectively corresponding to restoration paths having a same restoration path segment are bundled and mapped to a service group ID for association. (2) Service group ID configuration: including creation, updating, and deletion. The service group ID is added to a service restoration path and configured on a head node. The head node or the network device configures the service group ID on each node of the restoration path segment. When a network resource change, the service group ID needs to be updated and modified. (3) After the fault occurs, batch services associated with the affected service group ID are quickly established. After service restoration succeeds, the original service group ID on the original working path is deleted.

FIG. 9 shows service restoration of batch services on two paths and with a same restoration path segment. The first service may be considered as batch services on one of the two paths. Similarly, the second service may be considered as batch services on the other of the two paths. To be specific, the scenario shown in FIG. 9 may be understood as that the first working path and the second working path have different head nodes and the same last node, and the corresponding first restoration path and the second restoration path partially overlap (the overlapped segment is referred to as a restoration path segment).

With reference to FIG. 10, the following describes service restoration of batch services on one path and with a same restoration path segment. To be specific, the first working path and the second working path have the same head node and the same last node, and the corresponding first restoration path and the second restoration path partially overlap (the overlapped segment is referred to as a restoration path segment).

An ASON shown in FIG. 10 includes five ASON nodes: a node A, a node C, a node D, a node E, and a node F, and 80 services.

Working paths that carry the services 1 to 80 are the same: node A-node C-node E-node F. The first service may be considered as any one or more services in the services 1 to 80, and the second service may be considered as one or more services other than the first service in the services 1 to 80. The first working path and the second working path are the same working path.

It is assumed that a link C-E is faulty. For example, one or more of the following faults occur: a transmission optical fiber cut in the link C-E, or a fault in an interface that is in the node C and that sends information to the node E, or a fault in an interface that is in the node E and that sends information to the node C.

In the scenario shown in FIG. 10, the restoration path configuration method provided in an embodiment of this application includes the following steps.

### Step 1:

The network device determines, based on the fault of the link C-E, that a restoration path corresponding to a working path carrying services 1 to 80 is node A-node C-node D-node E-node F.

The network device determines, based on the restoration path, that restoration paths corresponding to working paths that carry the services 1 to 80 have a same restoration path segment: node C-node D-node E.

On a premise that the restoration paths have the same restoration path segment node C-node D-node E, the network device generates an ID 1. The ID 1 indicates to use the restoration path segment node C-node D-node E to perform service restoration for the services 1 to 80 carried on the working paths. It may be understood that the network device identifies, by using the service group ID 1, the same restoration path segment that the restoration paths corresponding to the services 1 to 80 have.

A difference between step 1 in the scenario shown in FIG. 10 and step 1 in the scenario shown in FIG. 9 lies in that there is only a head node-node A of one service, and a service data amount is small.

### Step 2:

The network device uses the PCEP to issue routing information of the restoration paths and the service group ID to the head nodes of the working paths.

A difference between step 2 in the scenario shown in FIG. 10 and step 2 in the scenario shown in FIG. 9 lies in that the network device sends a PCEP message only to the head node-node A.

### Step 3:

Configure path restoration capabilities of the head node and the last node (for example, the node C and the node E shown in FIG. 10) of the restoration path segment in the working paths (for example, node A-node C-node E-node F shown in FIG. 10) of the services by using the RSVP.

A difference between step 3 in the scenario shown in FIG. 10 and step 3 in the scenario shown in FIG. 9 lies in that only the head node-node A performs path restoration capability configuration.

### Step 4(a):

Add the RSVP to pre-configure a node resource on the restoration path segment.

A difference between step 4(a) in the scenario shown in FIG. 10 and step 4(a) in the scenario shown in FIG. 9 lies in that only the head node-node A completes pre-configuration of a node resource on the restoration path (node A-node C-node D-node E-node F) and on the restoration path segment by using an RSVP path message.

### Step 4(b):

The network device directly pre-configures a node resource on the restoration path segment by using a PCEP message.

In the scenario shown in FIG. 10, the restoration path configuration method provided in this application further includes service restoration.

The service restoration includes the following steps.

### Step 1:

When a link between the node C and the node E is faulty (for example, a fiber cut occurs between the node C and the node E), the node C perceives the fault, and finds an ID of an affected service group based on an identifier of the faulty link between the node C and the node E. Further, if it is determined that the node C corresponding to the faulty link has the path restoration capability, an alarm is suppressed from being notified to the head nodes (for example, the node A) of the working paths that carry the affected services. In other words, the notify message does not need to notify the head nodes of the working paths, thereby reducing a notification time period.

### Step 2:

The node C initiates a restoration path segment (node C-node D-node E) establishment process.

A difference between step 2 in the service restoration in the scenario shown in FIG. 10 and step 2 in the service restoration in the scenario shown in FIG. 9 lies in establishing cross-connections for the batch services 1 to 80.

### Step 3:

After successfully establishing the restoration path segment (node C-node D-node E), the node C notifies head nodes (for example, the node A) of working paths on which all services associated with the service group ID are carried of restoration success of the restoration path segment. The notify message carries the identifier of the faulty link, indication information of the restoration success of the restoration path segment, and routing information of the restoration path segment.

### Step 4:

After receiving the notify message sent by the node C indicating the restoration success of the restoration path segment, the head nodes (for example, the node A) of the working paths on which services (for example, the services 1 to 80) are carried match and find restoration paths of the services based on the identifier of the faulty link and the routing information of the restoration path segment, and take over the services.

### Step 5:

After all service restoration paths are successfully changed, the network device automatically collects information of working paths of network-wide services, and issues, based on updated changes of current paths of the services, a deletion message to the head nodes (for example, node A) of the working paths that carry the services. After receiving the deletion message, the head nodes locally delete the original service group ID (for example, ID 1).

### Step 6:

When a network resource changes, the network device collects network-wide link information in real time, re-computes a restoration path corresponding to a service affected by the link resource change, updates and modifies the service group ID, and issues an updated service group ID to the node of the working path that carries the service for configuring and updating the service group ID.

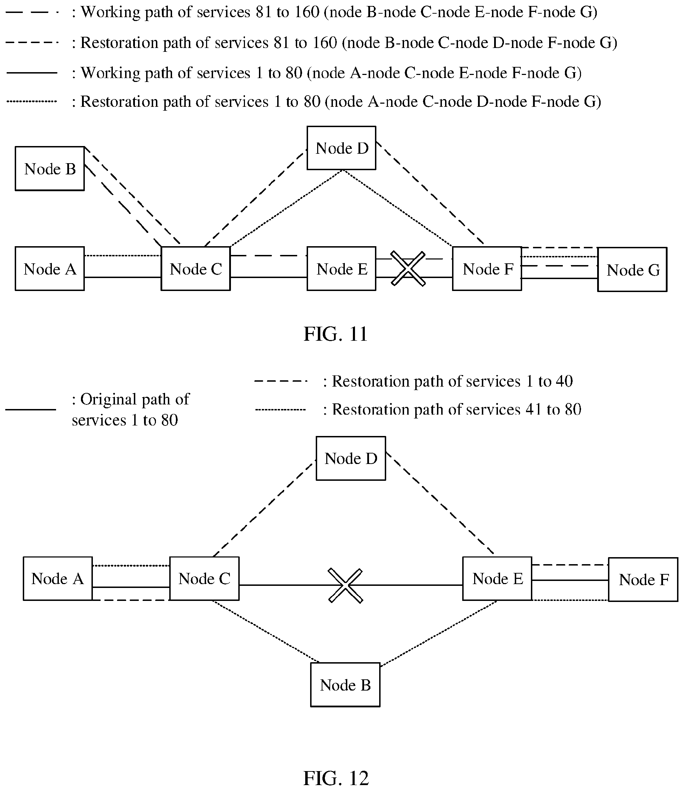

With reference to FIG. 11, the following describes service restoration of batch services on two paths and with a same restoration path segment, and a head node of the restoration path segment is an upstream node of a node of the faulty link.

An ASON shown in FIG. 11 includes seven ASON nodes: a node A, a node B, a node C, a node D, a node E, a node F, and a node G, and 160 services.

Working paths that carry the services 1 to 80 are the same: node A-node C-node E-node F-node G, and working paths that carry the services 81 to 160 are the same: node B-node C-node E-node F-node G. The first service may be considered as any one or more services in the services 1 to 80, and the second service may be considered as any one or more services in the services 81 to 160. Alternatively, the second service may be considered as any one or more services in the services 1 to 80, and the first service may be considered as any one or more services in the services 81 to 160.

It is assumed that a link E-F is faulty. For example, one or more of the following faults occur: a transmission optical fiber cut in the link E-F, or a fault in an interface that is in the node E and that sends information to the node F, or a fault in an interface that is in the node F and that sends information to the node E.

In the scenario shown in FIG. 11, the restoration path configuration process includes the following steps.

### Step 1:

The network device determines, based on the fault of the link E-F, that a first restoration path corresponding to a working path carrying the services 1 to 80 is node A-node C-node D-node F-node G, and a second restoration path corresponding to a working path carrying the services 81 to 160 is node B-node C-node D-node F-node G.

The network device determines, based on the first restoration path and the second restoration path, that the first restoration path and the second restoration path have a same restoration path segment: node C-node D-node F.

On a premise that the first restoration path and the second restoration path have the same restoration path segment node C-node D-node F, the network device generates an ID 1. The ID 1 indicates to use the restoration path segment node C-node D-node F to perform service restoration for the services 1 to 80 carried on the first working path and the services 81 to 160 carried on the second working path. It may be understood that the network device identifies, by using the service group ID 1, the same restoration path segment that the restoration paths corresponding to the services 1 to 160 have.

### Step 2:

The network device uses the PCEP to issue routing information of the restoration paths and the service group ID to the head nodes of the working paths.

Step 2 in the scenario shown in FIG. 11 is the same as step 2 in the scenario shown in FIG. 9, and details are not described herein again.

### Step 3:

Configure path restoration capabilities of the head node and the last node (for example, the node C and the node F shown in FIG. 11) of the restoration path segment in the working paths (for example, node A-node C-node E-node F shown in FIG. 11) by using the RSVP. A specific configuration procedure is similar to step 3 in the scenario shown in FIG. 9. A difference lies in that, in the scenario shown in FIG. 11, an RSVP path message further carries configuration information of the node E without the path restoration capability, and after the node E parses the RSVP path message, for the faulty link E-F, the node E cannot perform segment restoration. Optionally, the RSVP path message further carries an identifier of the head node of the restoration path segment, so that the node E learns that the head node of the restoration path segment having the path restoration capability is the node C.

Further, step 4(a) is performed. Step 4(a): Add the RSVP to pre-configure a node resource on the restoration path segment. Alternatively, step 4(b) is performed. Step 4(b): The network device directly pre-configures a node resource on the restoration path segment by using a PCEP message.

Step 4(a) and step 4(b) in the scenario shown in FIG. 11 are the same as step 4(a) and step 4(b) in the scenario shown in FIG. 9, and details are not described herein again.

In the scenario shown in FIG. 11, the restoration path configuration method provided in this application further includes service restoration.

The service restoration includes the following steps.

Step 1: When the link between the node E and the node F is faulty (for example, a fiber cut occurs between the node E and the node F), the node E perceives the fault, and finds the ID of the affected service group based on an identifier of the faulty link between the node E and the node F. Further, the node E determines that the node E corresponding to the faulty link does not have the segment restoration capability, and needs to notify the head node-node C of the restoration path segment having the path restoration capability of information about the faulty link.

Step 2 to step 6 in the service restoration in the scenario shown in FIG. 11 are the same as step 2 to step 6 in the service restoration in the scenario shown in FIG. 9, and details are not described herein again.

With reference to FIG. 12, the following describes service restoration of batch services on one path and with two different restoration paths.

An ASON shown in FIG. 12 includes six ASON nodes: a node A, a node B, a node C, a node D, a node E, and a node F, and 80 services.

Working paths that carry the services 1 to 80 are the same: node A-node C-node E-node F.

It is assumed that a link C-E is faulty. For example, one or more of the following faults occur: a transmission optical fiber cut in the link C-E, or a fault in an interface that is in the node C and that sends information to the node E, or a fault in an interface that is in the node E and that sends information to the node C.

In the scenario shown in FIG. 12, the restoration path configuration method provided in an embodiment of this application includes the following steps.

### Step 1:

The network device determines, based on the fault of the link C-E, that a third restoration path corresponding to a working path carrying services 1 to 40 is node A-node C-node D-node E-node F, and a fourth restoration path corresponding to a working path carrying services 41 to 80 is node A-node C-node B-node E-node F. The first service may be considered as one or more services in the services 1 to 40, and the second service may be considered as one or more services other than the first service in the services 1 to 40. Alternatively, the first service may be considered as one or more services in the services 41 to 80, and the second service may be considered as one or more services other than the first service in the services 41 to 80.

The network device determines, based on the third restoration path, that restoration paths corresponding to working paths that carry the services 1 to 40 have a same restoration path segment: node C-node D-node E. The network device determines, based on the fourth restoration path, that restoration paths corresponding to working paths that carry the services 41 to 80 have a same restoration path segment: node C-node B-node E.

On a premise that the third restoration path has the same restoration path segment node C-node D-node E, the network device generates an ID 1. The ID 1 indicates to use the restoration path segment node C-node D-node E to perform service restoration for the services 1 to 40 carried on the working path. It may be understood that the network device identifies, by using the service group ID 1, the same restoration path segment that the restoration paths corresponding to the services 1 to 40 have.

Similarly, on a premise that the third restoration path has the same restoration path segment node C-node B-node E, the network device generates an ID 2. The ID 2 indicates to use the restoration path segment node C-node B-node E to perform service restoration for the services 41 to 80 carried on the working paths. It may be understood that the network device identifies, by using the service group ID 2, the same restoration path segment that the services 41 to 80 have.

A difference between step 1 in the scenario shown in FIG. 12 and step 1 in the scenario shown in FIG. 9 lies in that ASON resources are insufficient, and services affected by the same faulty link are divided into two restoration paths for restoration, which are mapped to two service group IDs.

### Step 2:

The network device uses the PCEP to issue routing information of the restoration paths and the service group ID to the head nodes of the working paths.

A difference between step 2 in the scenario shown in FIG. 12 and step 2 in the scenario shown in FIG. 9 lies in that service group IDs of the services 1 to 80 are not a same value, but two service group IDs.

### Step 3:

Configure path restoration capabilities of the head node and the last node (for example, the node C and the node E shown in FIG. 12) of the restoration path segment in the working paths (for example, node A-node C-node E-node F shown in FIG. 12) by using the RSVP.

A difference between step 3 in the scenario shown in FIG. 12 and step 3 in the scenario shown in FIG. 9 lies in that the node C has two different restoration path segments for the services 1 to 80 affected by the faulty link identifier C-E. The restoration path segment corresponding to the services 1 to 40 is node C-node D-node E, and the restoration path segment corresponding to the services 41 to 80 is node C-node B-node E.

### Step 4(a):

Add the RSVP to pre-configure a node resource on the restoration path segment.

A difference between step 4(a) in the scenario shown in FIG. 12 and step 4(a) in the scenario shown in FIG. 9 lies in that, in addition to pre-configuration on the restoration path segment (node C-node D-node E) corresponding to the services 1 to 40, pre-configuration further needs to be performed on the restoration path segment (node C-node B-node E) corresponding to the services 41 to 80.

### Step 4(b):

The network device directly pre-configures a node resource on the restoration path segment by using a PCEP message.

A difference between step 4(b) in the scenario shown in FIG. 12 and step 4(b) in the scenario shown in FIG. 9 lies in that, in addition to pre-configuration on the restoration path segment (node C-node D-node E) corresponding to the services 1 to 40, pre-configuration further needs to be performed on the restoration path segment (node C-node B-node E) corresponding to the services 41 to 80.

In the scenario shown in FIG. 12, the restoration path configuration method provided in this application further includes service restoration.

The service restoration includes the following steps.

### Step 1:

When the link between the node C and the node E is faulty (for example, a fiber cut occurs between the node C and the node E), the node C perceives the fault, and finds the ID of the affected service group based on the identifier of the faulty link between the node C and the node E. Further, if it is determined that the node C corresponding to the faulty link has the path restoration capability, an alarm is suppressed from being notified to the head nodes (for example, the node A) of the working paths that carry the affected services. In other words, the notify message does not need to notify the head nodes of the working paths, thereby reducing a notification time period.

### Step 2:

The node C initiates a restoration path segment (node C-node D-node E and node C-node B-node E) establishment process.

A difference between step 2 in the service restoration in the scenario shown in FIG. 12 and step 2 in the service restoration in the scenario shown in FIG. 9 lies in that two restoration path segments need to be established.

### Step 3:

After successfully establishing the restoration path segments (node C-node D-node E and node C-node B-node E), the node C notifies head nodes (for example, the node A) of working paths on which services associated with the service group ID are carried of restoration success of the restoration path segments. The notify message carries the identifier of the faulty link, indication information of the restoration success of the restoration path segments, and routing information of the restoration path segments.

Step 4 to step 6 in the service restoration in the scenario shown in FIG. 12 are the same as step 4 to step 6 in the service restoration in the scenario shown in FIG. 10, and details are not described herein again.

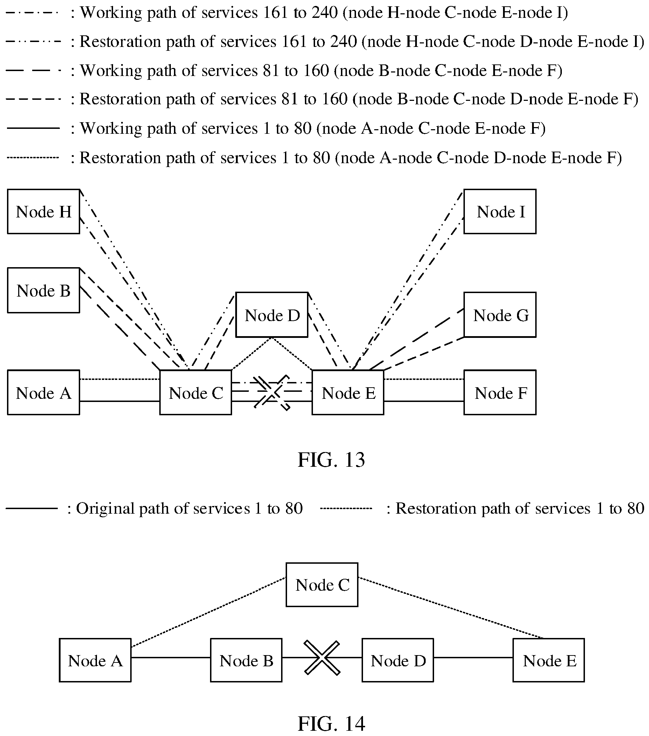

With reference to FIG. 13, the following describes service restoration of batch services on a plurality of paths and with a same segment restoration path.

An ASON shown in FIG. 13 includes nine ASON nodes: a node A, a node B, a node C, a node D, a node E, a node F, a node G, a node H, and a node I, and 240 services.

Working paths that carry the services 1 to 80 are the same: node A-node C-node E-node F. Working paths that carry the services 81 to 160 are the same: node B-node C-node E-node F. Working paths that carry the services 161 to 240 are the same: node H-node C-node E-node I. The first service may be considered as any one or more services in the services 1 to 80, and the second service may be considered as any one or more services in the services 81 to 160 or the services 161 to 240.

It is assumed that a link C-E is faulty. For example, one or more of the following faults occur: a transmission optical fiber cut in the link C-E, or a fault in an interface that is in the node C and that sends information to the node E, or a fault in an interface that is in the node E and that sends information to the node C.

In the scenario shown in FIG. 13, the restoration path configuration method provided in an embodiment of this application includes the following steps.

### Step 1:

The network device determines, based on the fault of the link C-E, that a first restoration path corresponding to a working path carrying services 1 to 80 is node A-node C-node D-node E-node F, a second restoration path corresponding to a working path carrying services 81 to 160 is node B-node C-node D-node E-node F, and a fifth restoration path corresponding to a working path carrying services 161 to 240 is node H-node C-node D-node E-node I.

The network device determines, based on the first restoration path, the second restoration path, and the fifth restoration path, that the first restoration path, the second restoration path, and the fifth restoration path have a same restoration path segment: node C-node D-node E.

On a premise that the first restoration path, the second restoration path, and the fifth restoration path have the same restoration path segment node C-node D-node E, the network device generates an ID 1. The ID 1 indicates to use the restoration path segment node C-node D-node E to perform service restoration for the services 1 to 80 carried on the first working path, the services 81 to 160 carried on the second working path, and the services 161 to 240 carried on the second working path. It may be understood that the network device identifies, by using the service group ID 1, the same restoration path segment that the restoration paths corresponding to the services 1 to 240 have.

### Step 2:

The network device uses the PCEP to issue routing information of the restoration paths and the service group ID to the head nodes of the working paths.

A difference between step 2 in the scenario shown in FIG. 13 and step 2 in the scenario shown in FIG. 9 lies in that in addition to issuing a PCEP message to the node A and issuing a PCEP message to the node B, issuing a PCEP message to the node H is further needed.

### Step 3:

Configure path restoration capabilities of the head node and the last node (for example, the node C and the node E shown in FIG. 13) of the restoration path segment in the working paths (for example, node A-node C-node E-node F, node B-node C-node E-node F, and node H-node C-node E-node I shown in FIG. 13) by using the RSVP.

A difference between step 3 in the scenario shown in FIG. 13 and step 3 in the scenario shown in FIG. 9 lies in that the head node changes from two nodes: node A and node B to three nodes: node A, node B, and node H, and a quantity of services changes from 160 to 240.

### Step 4(a):

Add the RSVP to pre-configure a node resource on the restoration path segment.

A difference between step 4(a) in the scenario shown in FIG. 13 and step 4(a) in the scenario shown in FIG. 9 lies in that the node A, the node B, and the node H separately complete pre-configuration of a node resource on the restoration path segment (node C-node D-node E) in the first restoration path (node A-node C-node D-node E-node F), the second restoration path (node B-node C-node D-node E-node F), and the fifth restoration path (node H-node C-node D-node E-node I) by using RSVP path messages.

### Step 4(b):

The network device directly pre-configures a node resource on the restoration path segment by using a PCEP message.

A difference between step 4(b) in the scenario shown in FIG. 13 and step 4(b) in the scenario shown in FIG. 9 lies in that the network device pre-configures a node resource on the restoration path segment (node C-node D-node E) in the first restoration path (node A-node C-node D-node E-node F), the second restoration path (node B-node C-node D-node E-node F), and the fifth restoration path (node H-node C-node D-node E-node I) by using PCEP messages.

In the scenario shown in FIG. 13, the restoration path configuration method provided in this application further includes service restoration.

The service restoration includes the following steps.

### Step 1:

When the link between the node C and the node E is faulty (for example, a fiber cut occurs between the node C and the node E), the node C perceives the fault, and finds the ID of the affected service group based on the identifier of the faulty link between the node C and the node E. Further, if it is determined that the node C corresponding to the faulty link has the path restoration capability, an alarm is suppressed from being notified to the head nodes (for example, the node A, the node B, and the node H) of the working paths that carry the affected services. In other words, the notify message does not need to notify the head nodes of the working paths, thereby reducing a notification time period.

### Step 2:

The node C initiates a restoration path segment (node C-node D-node E) establishment process.

A difference between step 2 in service restoration in the scenario shown in FIG. 13 and step 2 in service restoration in the scenario shown in FIG. 9 lies in that the quantity of services associated with the service group ID is changed from 160 to 240 for cross-connection configuration of service restoration.

### Step 3:

After successfully establishing the restoration path segment (node C-node D-node E), the node C notifies head nodes (for example, the node A, the node B, and the node H) of working paths on which all services associated with the service group ID are carried of restoration success of the restoration path segment. The notify message carries the identifier of the faulty link, indication information of the restoration success of the restoration path segment, and routing information of the restoration path segment.

### Step 4:

After receiving the notify message sent by the node C indicating the restoration success of the restoration path segment, the head nodes (for example, the node A, the node B, and the node H) of the working paths on which services (for example, the services 1 to 240) are carried match and find restoration paths based on the identifier of the faulty link and the routing information of the restoration path segment, and take over the services.

Step 5 to step 6 in the service restoration in the scenario shown in FIG. 13 are the same as step 5 to step 6 in the service restoration in the scenario shown in FIG. 10, and details are not described herein again.

With reference to FIG. 14, the following describes end-to-end service restoration of batch services on one path and with a same restoration path.

An ASON shown in FIG. 14 includes five ASON nodes: a node A, a node B, a node C, a node D, and a node E, and 80 services.

Working paths that carry the services 1 to 80 are the same: node A-node B-node D-node E. The first service may be considered as one or more services in the services 1 to 80, and the second service may be considered as one or more services other than the first service in the services 1 to 80.

It is assumed that at least one of a link A-B, a link B-D, and a link D-E is faulty.

In the scenario shown in FIG. 14, the restoration path configuration method provided in an embodiment of this application includes the following steps.

### Step 1:

The node A and/or the network device determines, based on the fault of the link, that a restoration path corresponding to a working path carrying services 1 to 80 is node A-node C-node E.

The node A and/or the network device determines, based on the restoration path, that restoration paths corresponding to working paths that carry the services 1 to 80 are the same: node A-node C-node E.

On a premise that the restoration paths are the same, the node A and/or the network device generate an ID 1. The ID 1 indicates to use the restoration path node A-node C-node E to perform service restoration for the services 1 to 80 carried on the working paths. It may be understood that the node A and/or the network device identifies, by using the service group ID 1, that the restoration paths of the services 1 to 80 are the same.

### Step 2:

The network device uses the PCEP to issue routing information of the restoration paths and the service group ID to the head nodes of the working paths.

It should be noted that, if the node A performs bundle mapping association for the service group ID in step 1, step 2 may not be performed.

### Step 3(a):

Add the RSVP to pre-configure a node (node A-node C-node E) resource on the restoration path.

Step 3(a) in the scenario shown in FIG. 14 has a same specific pre-configuration procedure as step 4(a) in the scenario shown in FIG. 9, and details are not described herein again.

### Step 3(b):

The network device directly pre-configures a node (node A-node C-node E) resource on the restoration path by using a PCEP message.

Step 3(b) in the scenario shown in FIG. 14 has a same specific pre-configuration procedure as step 4(b) in the scenario shown in FIG. 9, and details are not described herein again.

In the scenario shown in FIG. 14, the restoration path configuration method provided in this application further includes service restoration.

The service restoration includes the following steps.

### Step 1

When the link between the node B and the node D is faulty (for example, a fiber cut occurs between the node B and the node D), the node B perceives the fault, and finds the ID of the affected service group based on the identifier of the faulty link between the node B and the node D. Further, if it is determined that the node B corresponding to the faulty link does not have the path restoration capability, and in this embodiment, the node B is not notified of an identifier of the head node of the restoration path segment that has the path restoration capability, the node B directly notifies the head node (for example, the node A) of the working path carrying the affected service.

### Step 2

After receiving the notification, the node A matches and finds the affected service group ID, and initiates restoration path establishment with the head node being the node A and the last node being the node E by using an RSVP path message. The RSVP path message carries the service group ID and the routing information (node A-node C-node E) of the restoration path, to complete cross-connection configuration and establishment of the restoration path corresponding to the services 1 to 80 associated with the service group ID. A packet format of the RSVP path message is the same as the packet format of the RSVP path message shown in step 4(a) in the scenario shown in FIG. 9, and details are not described herein again.

Step 3 to step 5 in the service restoration in the scenario shown in FIG. 11 are the same as step 4 to step 6 in the service restoration in the scenario shown in FIG. 9, and details are not described herein again.

It should be understood that the network device or a node in the ASON in the foregoing method embodiments may perform all or some of the steps in the embodiments. These steps or operations are merely examples. Embodiments of this application may further include performing other operations or variations of various operations.

It should be further understood that, in embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

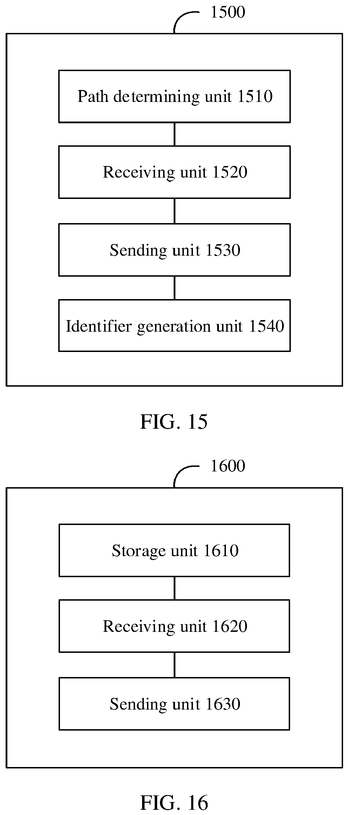

The foregoing describes in detail the restoration path configuration method provided in embodiments of this application with reference to FIG. 4 to FIG. 14. The following describes in detail the restoration path configuration apparatus provided in embodiments of this application with reference to FIG. 15 to FIG. 17.

FIG. 15 is a schematic diagram of a restoration path configuration apparatus 1500 according to this application. As shown in FIG. 15, the apparatus 1500 includes a path determining unit 1510, a receiving unit 1520, a sending unit 1530, and an identifier generation unit 1540. The path determining unit 1510 and the identifier generation unit 1540 may be collectively referred to as a processing unit.

The path determining unit 1510 is configured to determine a first restoration path of a first working path and a second restoration path of a second working path. The first restoration path is used to perform service restoration for the first working path when the first working path is faulty. The second restoration path is used to perform service restoration for the second working path when the second working path is faulty. The first restoration path and the second restoration path have a same restoration path segment.

The identifier generation unit 1540 is further configured to generate a first identifier ID. The first ID indicates to use the restoration path segment to perform service restoration for the first working path and the second working path.

For example, the sending unit 1530 is configured to send a configuration message to a head node of the restoration path segment.

For example, the receiving unit 1520 is configured to receive a path establishment response message.

The apparatus 1500 corresponds to the network device in the method embodiments. The apparatus 1500 may be the network device in the method embodiments, or a chip or a functional module in the network device in the method embodiments. Corresponding units of the apparatus 1500 are configured to perform corresponding steps performed by the network device in the method embodiments shown in FIG. 4(a).

The path determining unit 1510 in the apparatus 1500 is configured to perform a step that corresponds to the network device and that is related to path determination in the method embodiments. The identifier generation unit 1540 is configured to perform a step that is corresponding to the network device and that is related to identifier generation in the method embodiments. The receiving unit 1520 in the apparatus 1500 performs the step of receiving by the network device in the method embodiments. The sending unit 1530 in the apparatus 1500 performs the step of sending by the network device in the method embodiments.

The receiving unit 1520 and the sending unit 1530 may form a transceiver unit that has both receiving and sending functions. The path determining unit 1510 and the identifier generation unit 1540 may be collectively referred to as a processing unit, and the processing unit may be at least one processor. The sending unit 1530 may be a transmitter or an interface circuit, and the receiving unit 1520 may be a receiver or an interface circuit. The receiver and the transmitter may be integrated together to form a transceiver or an interface circuit.

Optionally, the apparatus 1500 may further include a storage unit, configured to store data and/or signaling. The path determining unit 1510, the identifier generation unit 1540, the sending unit 1530, and the receiving unit 1520 may interact with or be coupled to the storage unit, for example, read or invoke the data and/or signaling in the storage unit, so that the method in the foregoing embodiments is performed.

The foregoing units may exist independently, or may be all or partially integrated.

FIG. 16 is a schematic diagram of a restoration path configuration apparatus 1600 according to this application. As shown in FIG. 16, the apparatus 1600 includes a storage unit 1610, a receiving unit 1620, and a sending unit 1630.

The receiving unit 1620 is configured to receive a first configuration message from a network device. The first configuration message carries a first identifier ID, and the first ID indicates to use a restoration path segment to perform service restoration for a first working path and a second working path.

The restoration path segment is a same restoration path segment in a first restoration path and a second restoration path. The first restoration path is used to perform service restoration for the first working path when the first working path is faulty. The second restoration path is used to perform service restoration for the second working path when the second working path is faulty.

The storage unit 1610 is configured to store the first ID.

For example, the sending unit 1630 is configured to send a configuration message to a head node of the restoration path segment.

For example, the receiving unit 1620 is configured to receive a path establishment response message.

The apparatus 1600 corresponds to the node (for example, the third node in FIG. 4(a)) in the method embodiments. The apparatus 1600 may be the node in the method embodiments, or a chip or a functional module inside the node in the method embodiments. Corresponding units of the apparatus 1600 are configured to perform corresponding steps performed by the node in the method embodiments shown in FIG. 4(a).

The storage unit 1610 in the apparatus 1600 is configured to perform storage-related steps corresponding to the node in the method embodiments. The receiving unit 1620 in the apparatus 1600 performs the step of receiving by the node in the method embodiments. The sending unit 1630 in the apparatus 1600 performs the step of sending by the node in the method embodiments.

The receiving unit 1620 and the sending unit 1630 may form a transceiver unit that has both receiving and sending functions. The storage unit 1610 may be at least one memory. The sending unit 1630 may be a transmitter or an interface circuit, and the receiving unit 1620 may be a receiver or an interface circuit. The receiver and the transmitter may be integrated together to form a transceiver or an interface circuit.

Optionally, the sending unit 1630 and the receiving unit 1620 may interact with or be coupled to the storage unit 1610, for example, read or invoke data and/or signaling in the storage unit, so that the method in the foregoing embodiments is performed.

The foregoing units may exist independently, or may be all or partially integrated.

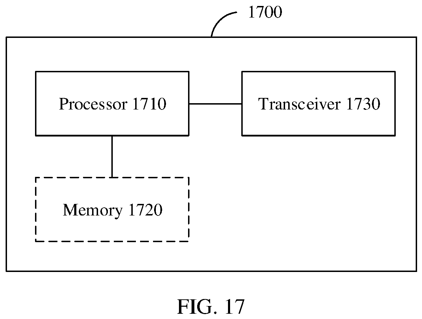

FIG. 17 is a schematic diagram of a restoration path configuration apparatus 1700 according to this application. The restoration path configuration apparatus 1700 includes a processor 1710. The processor 1710 is coupled to a memory 1720. The memory 1720 is configured to store a computer program or instructions and/or data. The processor 1710 is configured to execute the computer program or the instructions and/or the data stored in the memory 1720, so that the method in the foregoing method embodiments is performed.

Optionally, the restoration path configuration apparatus 1700 includes one or more processors 1710.

Optionally, as shown in FIG. 17, the restoration path configuration apparatus 1700 may further include the memory 1720.

Optionally, the restoration path configuration apparatus 1700 may include one or more memories 1720.

Optionally, the memory 1720 and the processor 1710 may be integrated together, or may be separately disposed.

Optionally, as shown in FIG. 17, the restoration path configuration apparatus 1700 may further include a transceiver 1730, and the transceiver 1730 is configured to receive and/or send a signal. For example, the processor 1710 is configured to control the transceiver 1730 to receive and/or send a signal.

In a solution, the restoration path configuration apparatus 1700 is configured to implement operations performed by the units in the network device in the foregoing method embodiments.

For example, the processor 1710 is configured to implement processing-related operations performed by the processing unit (for example, the path determining unit 1510 and the identifier generation unit 1540) of the network device in the foregoing method embodiments.

In another solution, the restoration path configuration apparatus 1700 is configured to implement operations performed by the units in the node in the foregoing method embodiments.

For example, the transceiver 1730 is configured to implement processing-related operations performed by the receiving unit 1620 and the sending unit 1630 of the node in the foregoing method embodiments.

An embodiment of this application further provides a computer-readable storage medium. The computer-readable storage medium stores computer instructions used to implement the method performed by a sending device or the method performed by the sending device in the foregoing method embodiments.

An embodiment of this application further provides a computer program product. When the computer program is executed by a computer, the computer can implement the method performed by the network device in the foregoing method embodiments.

An embodiment of this application further provides a communication system. The communication system includes the network device and the node in the foregoing embodiments.

In this application, the terms "include", "have", and any other variants mean to cover the non-exclusive inclusion, for example, a process, method, system, product, or device that includes a list of steps or units is not necessarily limited to those steps or units that are clearly listed, but may include other steps or units not expressly listed or inherent to such a process, method, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be, for example, a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

In addition, the term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A restoration path configuration method, wherein the method comprises:
determining, by a network device, a first restoration path of a first working path and a second restoration path of a second working path, wherein the first restoration path is used to perform service restoration for the first working path when the first working path is faulty, the second restoration path is used to perform service restoration for the second working path when the second working path is faulty, and the first restoration path and the second restoration path have a same restoration path segment; and
generating, by the network device, a first identifier ID, wherein the first ID indicates to use the restoration path segment to perform service restoration for the first working path and the second working path.

2. The method according to claim 1, wherein the method further comprises:
sending, by the network device, a first configuration message to a head node of the restoration path segment, wherein the first configuration message carries the first ID.

3. The method according to claim 1 or 2, wherein the method further comprises:
sending, by the network device, a second configuration message to the head node of the restoration path segment, wherein the second configuration message carries routing information of the restoration path segment.

4. The method according to any one of claims 1 to 3, wherein the method further comprises:
sending, by the network device, a third configuration message to a node of the restoration path segment, wherein the third configuration message carries a channel resource of the restoration path segment in the first restoration path and a channel resource of the restoration path segment in the second restoration path; and
that the first ID indicates to use the restoration path segment to perform service restoration for the first working path and the second working path comprises:
the first ID indicates to use the channel resource of the restoration path segment in the first restoration path to perform service restoration for the first working path, and use the channel resource of the restoration path segment in the second restoration path to perform service restoration for the second working path.

5. The method according to any one of claims 1 to 4, wherein the method further comprises:
sending, by the network device, a fourth configuration message to an end node of the restoration path segment, wherein the fourth configuration message carries a type of the end node, the type of the end node comprises the head node of the restoration path segment or a last node of the restoration path segment, and the head node of the restoration path segment or the last node of the restoration path segment has a path restoration capability.

6. The method according to any one of claims 1 to 5, wherein when the network device is the head node of the restoration path segment, and the network device determines that the first working path and the second working path are faulty, the method further comprises:
sending, by the network device, a path establishment request message to an adjacent downstream node of the restoration path segment, wherein the path establishment request message carries the first ID.

7. The method according to any one of claims 1 to 6, wherein when the restoration path segment is used to perform service restoration for the first working path and the second working path, the method further comprises:
receiving, by the network device, a path establishment response message, wherein the path establishment response message indicates a service restoration result of the first working path and a service restoration result of the second working path.

8. A restoration path configuration method, wherein the method comprises:
receiving, by a first node, a first configuration message from a network device, wherein the first configuration message carries a first identifier ID, and the first ID indicates to use a restoration path segment to perform service restoration for a first working path and a second working path, wherein
the restoration path segment is a same restoration path segment in a first restoration path and a second restoration path, the first restoration path is used to perform service restoration for the first working path when the first working path is faulty, and the second restoration path is used to perform service restoration for the second working path when the second working path is faulty; and
storing, by the first node, the first ID.

9. The method according to claim 8, wherein the method further comprises:
receiving, by the first node, a second configuration message from the network device, wherein the second configuration message carries routing information of the restoration path segment.

10. The method according to claim 8 or 9, wherein the method further comprises:
receiving, by the first node, a third configuration message from the network device, wherein the third configuration message carries a channel resource of the restoration path segment in the first restoration path and a channel resource of the restoration path segment in the second restoration path; and
that the first ID indicates to use the restoration path segment to perform service restoration for the first working path and the second working path comprises:
the first ID indicates to use the channel resource of the restoration path segment in the first restoration path to perform service restoration for the first working path, and use the channel resource of the restoration path segment in the second restoration path to perform service restoration for the second working path.

11. The method according to any one of claims 8 to 10, wherein the method further comprises:
receiving, by the first node, a fourth configuration message from the network device, wherein the fourth configuration message carries a type of the first node, the type of the first node comprises a head node of the restoration path segment or a last node of the restoration path segment, and the head node of the restoration path segment or the last node of the restoration path segment has a path restoration capability.

12. The method according to any one of claims 8 to 11, wherein when the first node determines that the first working path and the second working path are faulty, the method further comprises:
sending, by the first node, a path establishment request message to an adjacent downstream node of the restoration path segment, wherein the path establishment request message carries the first ID.

13. The method according to any one of claims 8 to 12, wherein when the restoration path segment is used to perform service restoration for the first working path and the second working path, the method further comprises:
sending, by the first node, a path establishment response message to the network device, wherein the path establishment response message indicates a service restoration result of the first working path and a service restoration result of the second working path.

14. A restoration path configuration apparatus, wherein the apparatus comprises:
a path determining unit, configured to determine a first restoration path of a first working path and a second restoration path of a second working path, wherein the first restoration path is used to perform service restoration for the first working path when the first working path is faulty, the second restoration path is used to perform service restoration for the second working path when the second working path is faulty, and the first restoration path and the second restoration path have a same restoration path segment; and
an identifier generation unit, further configured to generate a first identifier ID, wherein the first ID indicates to use the restoration path segment to perform service restoration for the first working path and the second working path.

15. The apparatus according to claim 14, wherein the apparatus further comprises:
a sending unit, configured to send a first configuration message to a head node of the restoration path segment, wherein the first configuration message carries the first ID.

16. The apparatus according to claim 14 or 15, wherein the apparatus further comprises:
a sending unit, configured to send a second configuration message to the head node of the restoration path segment, wherein the second configuration message carries routing information of the restoration path segment.

17. The apparatus according to any one of claims 14 to 16, wherein the apparatus further comprises:
a sending unit, configured to send a third configuration message to a node of the restoration path segment, wherein the third configuration message carries a channel resource of the restoration path segment in the first restoration path and a channel resource of the restoration path segment in the second restoration path; and
that the first ID indicates to use the restoration path segment to perform service restoration for the first working path and the second working path comprises:
the first ID indicates to use the channel resource of the restoration path segment in the first restoration path to perform service restoration for the first working path, and use the channel resource of the restoration path segment in the second restoration path to perform service restoration for the second working path.

18. The apparatus according to any one of claims 14 to 17, wherein the apparatus further comprises:
a sending unit, configured to send a fourth configuration message to an end node of the restoration path segment, wherein the fourth configuration message carries a type of the end node, the type of the end node comprises the head node of the restoration path segment or a last node of the restoration path segment, and the head node of the restoration path segment or the last node of the restoration path segment has a path restoration capability.

19. The apparatus according to any one of claims 14 to 18, wherein when the apparatus is the head node of the restoration path segment, and the path determining unit determines that the first working path and the second working path are faulty, the apparatus further comprises:
a sending unit, configured to send a path establishment request message to an adjacent downstream node of the restoration path segment, wherein the path establishment request message carries the first ID.

20. The apparatus according to any one of claims 14 to 19, wherein when the restoration path segment is used to perform service restoration for the first working path and the second working path, the apparatus further comprises:
a receiving unit, configured to receive a path establishment response message, wherein the path establishment response message indicates a service restoration result of the first working path and a service restoration result of the second working path.

21. A restoration path configuration apparatus, wherein the apparatus comprises:
a receiving unit, configured to receive a first configuration message from a network device, wherein the first configuration message carries a first identifier ID, and the first ID indicates to use a restoration path segment to perform service restoration for a first working path and a second working path, wherein
the restoration path segment is a same restoration path segment in a first restoration path and a second restoration path, the first restoration path is used to perform service restoration for the first working path when the first working path is faulty, and the second restoration path is used to perform service restoration for the second working path when the second working path is faulty; and
a storage unit, configured to store the first ID.

22. The apparatus according to claim 21, wherein the receiving unit is further configured to receive a second configuration message from the network device, and the second configuration message carries routing information of the restoration path segment.

23. The apparatus according to claim 21 or 22, wherein the receiving unit is further configured to receive a third configuration message from the network device, and the third configuration message carries a channel resource of the restoration path segment in the first restoration path and a channel resource of the restoration path segment in the second restoration path; and
that the first ID indicates to use the restoration path segment to perform service restoration for the first working path and the second working path comprises:
the first ID indicates to use the channel resource of the restoration path segment in the first restoration path to perform service restoration for the first working path, and use the channel resource of the restoration path segment in the second restoration path to perform service restoration for the second working path.

24. The apparatus according to any one of claims 21 to 23, wherein the receiving unit is further configured to receive a fourth configuration message from the network device, the fourth configuration message carries a type of an end node of the restoration path segment, the type of the end node comprises a head node of the restoration path segment or a last node of the restoration path segment, and the head node of the restoration path segment or the last node of the restoration path segment has a path restoration capability.

25. The apparatus according to any one of claims 21 to 24, wherein when the apparatus is the network device, and the apparatus determines that the first working path and the second working path are faulty, the apparatus further comprises:
a sending unit, configured to send a path establishment request message to an adjacent downstream node of the restoration path segment, wherein the path establishment request message carries the first ID.

26. The apparatus according to any one of claims 21 to 25, wherein when the restoration path segment is used to perform service restoration for the first working path and the second working path, the apparatus further comprises:
a sending unit, configured to send a path establishment response message to the network device, wherein the path establishment response message indicates a service restoration result of the first working path and a service restoration result of the second working path.

27. An optical signal transmission device, comprising the restoration path configuration apparatus according to any one of claims 14 to 20, or comprising the restoration path configuration apparatus according to any one of claims 21 to 26.

28. A communication apparatus, comprising a processor, wherein the processor is coupled to a memory, the memory is configured to store a computer program or instructions, and the processor is configured to execute the computer program or the instructions in the memory, so that the method according to any one of claims 1 to 7 or the method according to any one of claims 8 to 13 is performed.

29. The apparatus according to claim 28, wherein the memory is integrated into the processor.

30. The apparatus according to claim 28 or 29, wherein the communication apparatus is a chip.

31. A computer-readable storage medium, wherein the computer-readable storage medium stores a computer program or instructions, and the computer program or the instructions is used to implement the method according to any one of claims 1 to 7 or the method according to any one of claims 8 to 13.

32. A computer program product, wherein the computer program product comprises a computer program, and when the computer program is run, a computer is enabled to perform the method according to any one of claims 1 to 7 or the method according to any one of claims 8 to 13.
